# EUROPEAN PATENT SPECIFICATION

(11) **EP 2 665 243 B1**
(45) Date of publication and mention of the grant of the patent: **21.03.2018**
(21) Application number: 13002273.4
(22) Date of filing: 29.04.2013
(51) Int. Cl.: G06F 3/0488, H04M 1/725

(54) **Mobile terminal and control method thereof**
Mobiles Endgerät und Steuerungsverfahren dafür
Terminal mobile et son procédé de contrôle

(30) Priority: 14.05.2012 KR 20120051123
(43) Date of publication of application: 20.11.2013
(73) Proprietor: LG Electronics, Inc., Seoul, 150-721 (KR)
(72) Inventor: Kim, Sungho, Gyeonggi-Do (KR)
(74) Representative: Frenkel, Matthias Alexander

(56) References cited:
- EP-A1- 1 798 690
- EP-A2- 1 962 480
- KR-B1- 100 691 977

## Description

### BACKGROUND OF THE INVENTION

### 1. Field of the invention

The present disclosure relates to a mobile terminal, and more particularly, to a mobile terminal and a control method thereof capable of configuring a background image of a background screen.

### 2. Description of the related art

Terminals can be classified into mobile or portable terminals and a stationary terminals based on its mobility. Furthermore, the mobile terminals can be further classified into handheld terminals and vehicle mount terminals based on whether or not it can be directly carried by a user.

As it becomes multifunctional, for example, such a terminal is allowed to capture still images or moving images, play music or video files, play games, receive broadcast and the like, so as to be implemented as an integrated multimedia player. Moreover, the improvement of structural or software elements of the terminal may be taken into consideration to support and enhance the functions of the terminal.

On the other hand, the display unit of the terminal may display a background screen. The user can configure a background image of the background screen. However, objects contained in the background screen is not taken into consideration, thereby causing a portion hidden by objects on the background screen. Accordingly, it causes inconvenience that the user cannot see a background image of the background screen as a whole.

EP 1 798 690 A1 relates to a method for displaying a background image in a mobile communication terminal. The method includes storing a predetermined image as background image depending on user's selection, storing position information of vertical screen frame and horizontal screen frame on the background image, and setting the background image; displaying an image of a region associated with the vertical screen frame among the background image, as background image, in response to a request for displaying a display screen of the mobile communication terminal in vertical direction; and displaying an image of a region associated with the horizontal screen frame among the background image, as background image, in response to a request for displaying the display screen of the mobile communication terminal in horizontal direction.

EP 1 962 480 A2 refers to a method of displaying a menu in a mobile communication terminal and a mobile communication terminal. The method of displaying menus in a mobile communication terminal comprises displaying a standby screen on a display of the mobile communication terminal. When one of a plurality of specific directions is selected through an input device of the mobile communication terminal, the method further comprises displaying at least a menu corresponding to the specific direction simultaneously with the standby screen.

### SUMMARY OF THE INVENTION

The present invention is directed to the mobile terminal of claim 1 and the method of claim 15. Advantageous embodiments are claimed in the dependent claims.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal according to the present disclosure;
FIGS. 2A and 2B are perspective views illustrating an external appearance of the mobile terminal according to the present disclosure;
FIG. 3 is a flow chart for explaining a mobile terminal according to an embodiment of the present disclosure;
FIGS. 4A through 4E are conceptual views illustrating a first operation example of the mobile terminal according to FIG. 3;
FIGS. 5A through 5E are conceptual views illustrating a second operation example of the mobile terminal according to FIG. 3;
FIGS. 6A through 6D are conceptual views illustrating a third operation example of the mobile terminal according to FIG. 3;
FIGS. 7A through 7D are conceptual views illustrating a fourth operation example of the mobile terminal according to FIG. 3;
FIGS. 8A through 8E are conceptual views illustrating a fifth operation example of the mobile terminal according to FIG. 3;
FIGS. 9A through 9D are conceptual views illustrating a sixth operation example of the mobile terminal according to FIG. 3;
FIGS. 10A through 10C are conceptual views illustrating a seventh operation example of the mobile terminal according to FIG. 3;
FIGS. 11A through 11G are conceptual views illustrating an eighth operation example of the mobile terminal according to FIG. 3; and
FIGS. 12A through 12D are conceptual views illustrating a ninth operation example of the mobile terminal according to FIG. 3.

### DETAILED DESCRIPTION OF THE INVENTION

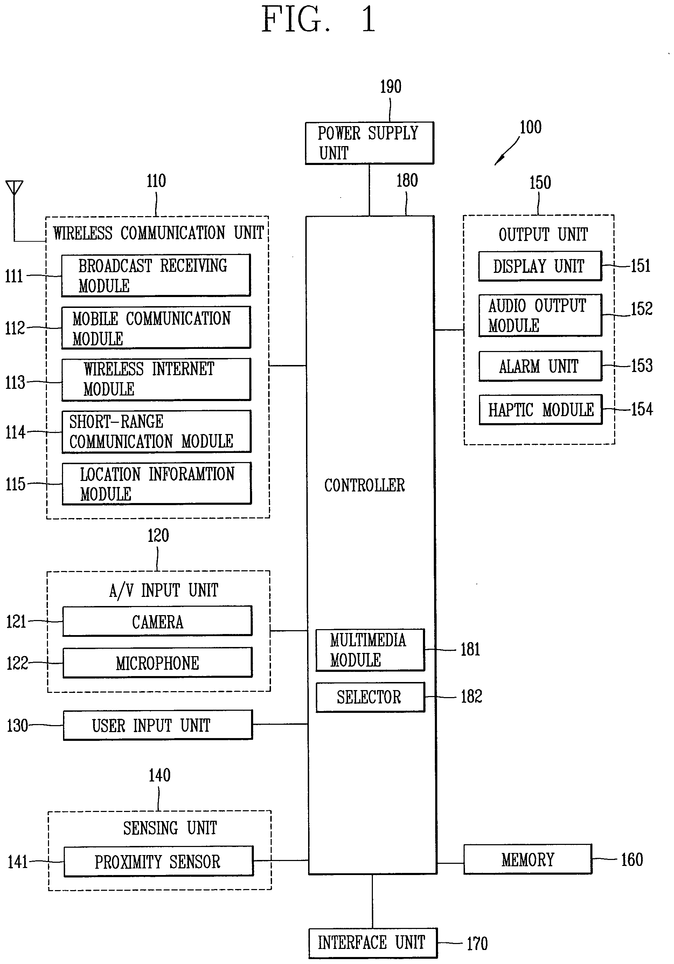

FIG. 1 is a block diagram illustrating a mobile terminal 100 according to an embodiment of the present disclosure. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile communication terminal may be implemented with greater or less number of elements than those illustrated elements.

Hereinafter, the constituent elements 110-190 of the mobile terminal 100 will be described in sequence.

The wireless communication unit 110 may include one or more elements allowing radio communication between the mobile terminal 100 and a wireless communication system, or allowing radio communication between the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel. The broadcast associated information may mean information regarding a broadcast channel, a broadcast program, a broadcast service provider, and the like. The broadcast associated information may also be provided through a mobile communication network. In this case, the broadcast associated information may be received by the mobile communication module 112. The broadcast signal and broadcast-associated information received through the broadcast receiving module 111 may be stored in the memory 160.

The mobile communication module 112 transmits and/or receives a radio signal to and/or from at least one of a base station, an external terminal and a server over a mobile communication network. The radio signal may include a voice call signal, a video call signal or various types of data according to text and/or multimedia message transmission and reception.

The wireless Internet module 113 as a module for supporting wireless Internet access may be built-in or externally installed to the mobile terminal 100. A variety of wireless Internet access techniques may be used, such as WLAN (Wireless LAN), Wi-Fi, Wibro (Wireless Broadband), Wimax (World Interoperability for Microwave Access), HSDPA (High Speed Downlink Packet Access), and the like.

The short-range communication module 114 refers to a module for supporting a short-range communication. A variety of short-range communication technologies may be used, such as Bluetooth, Radio Frequency IDentification (RFID), Infrared Data Association (IrDA), Ultra WideBand (UWB), ZigBee, and the like.

The location information module 115 is a module for acquiring a location of the mobile terminal 100, and there is a GPS module as a representative example.

Subsequently, referring to FIG. 1, the A/V(audio/video) input unit 120 receives an audio or video signal, and the A/V (audio/video) input unit 120 may include a camera 121, a microphone 122, and the like. The camera 121 processes an image frame, such as still or moving images, obtained by an image sensor in a video phone call or image capturing mode. The processed image frame may be displayed on a display unit 151. The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated during the process of receiving the external audio signal.

The user input unit 130 may generate input data to control an operation of the mobile terminal 100. The user input unit 130 may be configured with a keypad, a dome switch, a touch pad (pressure/capacitance), a jog wheel, a jog switch, and the like.

The sensing unit 140 detects presence or absence of the user's contact, and a current status of the mobile terminal 100 such as an opened or closed configuration, a location of the mobile terminal 100, an orientation of the mobile terminal 100, an acceleration or deceleration of the mobile terminal 100, and the like, and generates a sensing signal for controlling the operation of the mobile terminal 100. For example, when the mobile terminal 100 is a slide phone type, the sensing unit 140 may sense an opened or closed configuration of the slide phone. Furthermore, the sensing unit 140 may sense whether or not power is supplied from the power supply unit 190, or whether or not an external device is coupled to the interface unit 170.

The sensing unit 140 may include a proximity sensor 141. Furthermore, the sensing unit 140 may include a touch sensor (not shown) for sensing a touch operation with respect to the display unit 151.

The touch sensor may be implemented as a touch film, a touch sheet, a touch pad, and the like. The touch sensor may be configured to convert changes of a pressure applied to a specific part of the display unit 151, or a capacitance generated from a specific part of the display unit 151, into electric input signals. The touch sensor may be configured to sense not only a touched position and a touched area, but also a touch pressure.

When the touch sensor and display unit 151 forms an interlayer structure, the display unit 151 may be used as an input device rather than an output device. The display unit 151 may be referred to as a "touch screen".

When there is a touch input through the touch screen, the corresponding signals may be transmitted to a touch controller (not shown). The touch controller processes signals transferred from the touch sensor, and then transmits data corresponding to the processed signals to the controller 180. Accordingly, the controller 180 may sense which region of the display unit 151 has been touched.

When the touch screen is a capacitance type, the proximity of a sensing object may be detected by changes of an electromagnetic field according to the proximity of a sensing object. The touch screen may be categorized into a proximity sensor 141.

The proximity sensor 141 refers to a sensor for detecting the presence or absence of a sensing object using an electromagnetic field or infrared rays without a mechanical contact. The proximity sensor 141 has a longer lifespan and more enhanced utility than a contact sensor. The proximity sensor 141 may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like.

Hereinafter, for the sake of convenience of brief explanation, a behavior of closely approaching the touch screen without contact will be referred to as "proximity touch", whereas a behavior that the pointer substantially comes in contact with the touch screen will be referred to as "contact touch".

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The output unit 150 may generate an output related to visual, auditory, tactile senses. The output unit 150 may include a display unit 151, an audio output module 153, an alarm unit 154, a haptic module 155, and the like.

The display unit 151 may display (output) information processed in the mobile terminal 100. For example, when the mobile terminal 100 is operated in a phone call mode, the display unit 151 may display a user interface (UI) or graphic user interface (GUI) related to a phone call. When the mobile terminal 100 is operated in a video call mode or image capturing mode, the display unit 151 may display a captured image, a received image, Ul, GUI, or the like.

The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

At least one of those displays (or display devices) included in the display unit 151 may be configured with a transparent or optical transparent type to allow the user to view the outside therethrough. It may be referred to as a transparent display. A representative example of the transparent display may be a transparent OLED (TOLED), and the like. Under this configuration, the user can view an object positioned at a rear side of the mobile device body through a region occupied by the display unit 151 of the mobile device body.

There may exist two or more display units 151 according to the implementation of the mobile terminal 100. For example, a plurality of the display units 151 may be placed on one surface in a separate or integrated manner, or may be place on different surfaces, respectively.

The audio output module 153 may output audio data received from the wireless communication unit 110 or stored in the memory 160, in a call-receiving mode, a call-placing mode, a recording mode, a voice selection mode, a broadcast reception mode, and the like. The audio output module 153 may output an audio signal related to a function carried out in the mobile terminal 100 (for example, sound alarming a call received or a message received, and the like). The audio output module 153 may include a receiver, a speaker, a buzzer, and the like.

The alarm unit 154 outputs signals notifying the occurrence of an event from the mobile terminal 100. The examples of an event occurring from the mobile terminal 100 may include a call received, a message received, a key signal input, a touch input, and the like. The alarm unit 154 may output not only video or audio signals, but also other types of signals such as signals for notifying the occurrence of an event in a vibration manner. Since the video or audio signals may be also output through the display unit 151 or the audio output unit 153, the display unit 151 and the audio output module 153 may be categorized into part of the alarm unit 153.

The haptic module 155 generates various tactile effects that can be felt by the user. A representative example of the tactile effects generated by the haptic module 155 may include vibration. Vibration generated by the haptic module 155 may have a controllable intensity, a controllable pattern, and the like. For example, different vibrations may be output in a synthesized manner or in a sequential manner.

The haptic module 155 may generate various tactile effects, including not only vibration, but also arrangement of pins vertically moved with respect to a skin surface being touched, air injection force or air suction force through an injection port or suction port, touch by a skin surface, contact with an electrode, effects by stimulus such as an electrostatic force, reproduction of cold or hot feeling using a heat absorbing device or heat emitting device, and the like.

The haptic module 155 may be configured to transmit tactile effects through the user's direct contact, or the user's muscular sense using a finger or a hand. Two or more haptic modules 155 may be provided according to the configuration of the mobile terminal 100.

The memory 160 may store a program for operating the controller 180, or temporarily store input/output data (for example, phonebooks, messages, still images, moving images, and the like). The memory 160 may store data related to various patterns of vibrations and sounds outputted when performing a touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the portable terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as "identification device") may be implemented in a type of smart card. Hence, the identification device can be coupled to the mobile terminal 100 via a port.

The interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing related to telephony calls, data communications, video calls, and the like. The controller 180 may include a multimedia module 181 which provides multimedia playback. The multimedia module 181 may be configured as part of the controller 180 or as a separate component. The controller 180 can perform a pattern recognition processing so as to recognize a handwriting or drawing input on the touch screen as text or image.

The power supply unit 190 may receive external or internal power to provide power required by various components under the control of the controller 180.

Various embodiments described herein may be implemented in a computer or similar device readable medium using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units designed to perform the functions described herein. In some cases, such embodiments may be implemented in the controller 180 itself.

For software implementation, the embodiments such as procedures or functions may be implemented together with separate software modules that allow performing of at least one function or operation. Software codes can be implemented by a software application written in any suitable programming language. The software codes may be stored in the memory 160 and executed by the controller 180.

Hereinafter, the method of processing a user input to the mobile terminal 100 will be described.

The user input unit 130 is manipulated to receive a command for controlling the operation of the mobile terminal 100, and may include a plurality of manipulation units. The manipulation units may be commonly designated as a manipulating portion, and any method may be employed if it is a tactile manner allowing the user to perform manipulation with a tactile feeling.

Various kinds of visual information may be displayed on the display unit 151. The visual information may be displayed in the form of a character, a numeral, a symbol, a graphic, an icon, and the like. For an input of the visual information, at least one of a character, a numeral, a symbol, a graphic, and an icon may be displayed with a predetermined arrangement so as to be implemented in the form of a keypad. Such a keypad may be referred to as a so-called "soft key."

The display unit 151 may operate on an entire region or operate by dividing into a plurality of regions. In case of the latter, the plurality of regions may be configured to operate in an associative way. For example, an output window and an input window may be displayed on the upper and lower portions of the display unit 151, respectively. The output window and the input window may be regions allocated to output or input information, respectively. A soft key on which numerals for inputting a phone number or the like are displayed is outputted on the input window. When the soft key is touched, a numeral corresponding to the touched soft key is displayed on the output window. When the first manipulating unit is manipulated, a phone call connection for the phone number displayed on the output window will be attempted or a text displayed on the output window will be entered to the application.

The display unit 151 or touch pad may be configured to sense a touch scroll. The user may move an object displayed on the display unit 151, for example, a cursor or pointer placed on an icon or the like, by scrolling the display unit 151 or touch pad. Moreover, when a finger is moved on the display unit 151 or touch pad, a path being moved by the finger may be visually displayed on the display unit 151. It may be useful to edit an image displayed on the display unit 151.

In order to cope with a case where the display unit 151 and touch pad are touched together within a predetermined period of time, one function of the terminal 100 may be implemented. For the case of being touched together, there is a case when the user clamps a body of the mobile terminal 100 using his or her thumb and forefinger. For one of the above functions implemented in the mobile terminal 100, for example, there may be an activation or de-activation for the display unit 151 or touch pad.

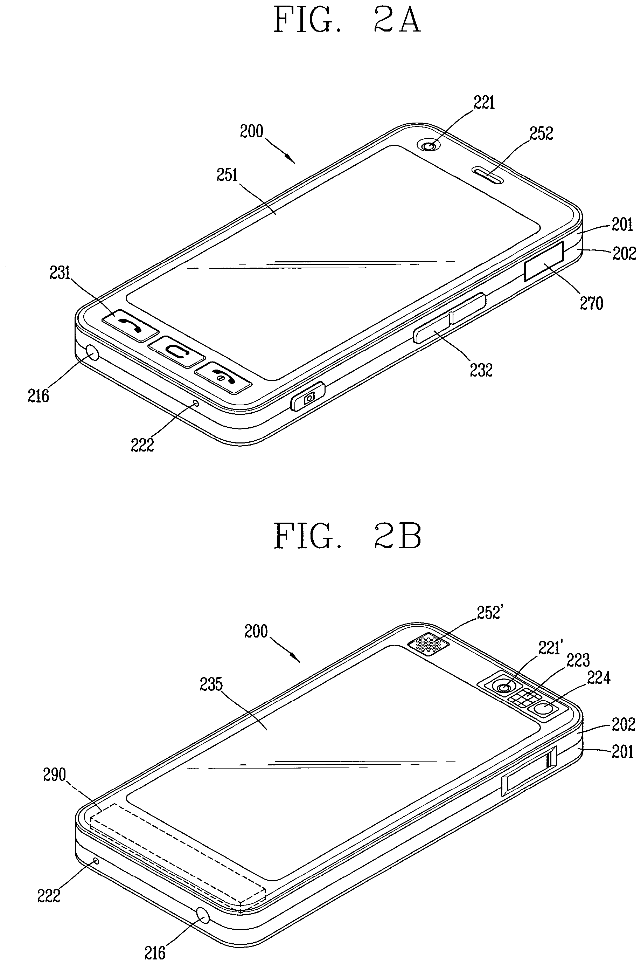

FIGS. 2A and 2B are perspective views illustrating the external appearance of a mobile terminal 100 related to the present disclosure. FIG. 2A is a front and a side view illustrating the mobile terminal 100, and FIG. 2B is a rear and the other side view illustrating the mobile terminal 100.

Referring to FIG. 2A, the mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

The terminal body includes a case (casing, housing, cover, etc.) forming an appearance of the terminal. In this embodiment, the case may be divided into a front case 101 and a rear case 102. Various electronic components may be integrated in a space formed between the front case 101 and the rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (refer to FIG. 1), a microphone 122, an interface 170, and the like may be arranged on the terminal body, mainly on the front case 101.

The display unit 151 occupies a most portion of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102.

The user input unit 130 is manipulated to receive a command for controlling the operation of the portable terminal 100. The user input unit 130 may include a plurality of manipulation units 131, 132.

The manipulation units 131, 132 may receive various commands. For example, the first manipulation unit 131 may be used to receive a command, such as start, end, scroll, or the like. The second manipulation unit 132 may be used to receive a command, such as controlling a volume level being outputted from the audio output unit 152, or switching it into a touch recognition mode of the display unit 151.

Referring to FIG. 2B, a camera 121' may be additionally mounted on a rear surface of the terminal body, namely, the rear case 102. The rear camera 121' has an image capturing direction, which is substantially opposite to the direction of the front camera 121 (refer to FIG. 2A), and may have different number of pixels from those of the front camera 121.

For example, that the front camera 121 may be configured to have a relatively small number of pixels, and the rear camera 121' may be configured to have a relatively large number of pixels. Accordingly, in case where the front camera 121 is used for video communication, it may be possible to reduce the size of transmission data when the user captures his or her own face and sends it to the other party in real time. On the other hand, the rear camera 121' may be used for the purpose of storing high quality images.

On the other hand, the cameras 121, 121' may be provided in the terminal body in a rotatable and popupable manner.

Furthermore, a flash 123 and a mirror 124 may be additionally disposed adjacent to the rear camera 121'. The flash 123 illuminates light toward an object when capturing the object with the camera 121'. The mirror 124 allows the user to look at his or her own face, or the like, in a reflected way when capturing himself or herself (in a self-portrait mode) by using the rear camera 121'.

Furthermore, a rear audio output unit 152' may be additionally disposed on a rear surface of the terminal body. The rear audio output unit 152' together with the front audio output unit 152 (refer to FIG. 2A) can implement a stereo function, and it may be also used to implement a speaker phone mode during a phone call.

Furthermore, an antenna 116 for receiving broadcast signals may be additionally disposed on a lateral surface of the terminal body. The antenna 116 constituting part of a broadcast receiving module 111 (refer to FIG. 1) may be provided so as to be pulled out from the terminal body.

Furthermore, a power supply unit 190 for supplying power to the portable terminal 100 may be mounted on the terminal body. The power supply unit 190 may be configured so as to be incorporated in the terminal body, or directly detachable from the outside of the terminal body.

A touch pad 135 for detecting a touch may be additionally mounted on the rear case 102. The touch pad 135 may be also configured with an optical transmission type, similarly to the display unit 151 (refer to FIG. 2A). Alternatively, a rear display unit for displaying visual information may be additionally mounted on the touch pad 135. At this time, information displayed on the both surfaces of the front display unit 151 and rear display unit may be controlled by the touch pad 135.

The touch pad 135 may be operated in conjunction with the display unit 151 of the front case 101. The touch pad 135 may be disposed in parallel at a rear side of the display unit 151. The touch pad 135 may have the same size as or a smaller size than the display unit 151.

Meanwhile, the display unit 151 of the mobile terminal 100 may display a background screen. The user can configure a background image of the background screen. However, objects contained in the background screen is not taken into consideration, thereby causing a portion hidden by objects on the background screen. Accordingly, it causes inconvenience that the user cannot see a background image of the background screen as a whole.

Accordingly, the mobile terminal 100 and control method thereof capable of enhancing the user's convenience associated with configuring a background image of a background screen will be described below with reference to the accompanying drawings.

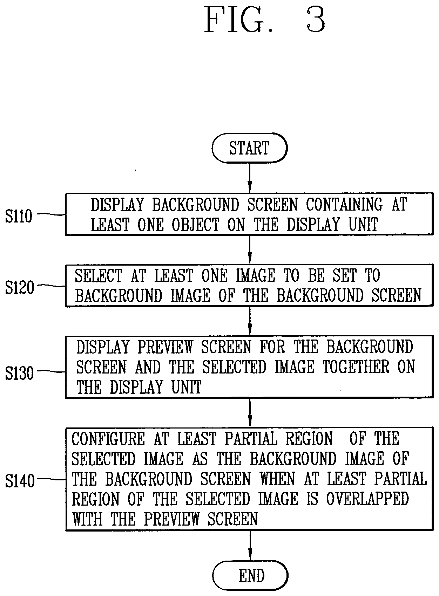

FIG. 3 is a flow chart for explaining a mobile terminal 100 (refer to FIG. 1) according to an embodiment of the present disclosure. The mobile terminal 100 may include a display unit 151 (refer to FIG. 1), a selector 182 (refer to FIG. 1), and a controller 180 (refer to FIG. 1).

Referring to FIG. 3, the process of displaying a background screen containing at least one object on the display unit 151 (S110) is first carried out.

Here, the background screen may include at least one of background screen for home screen and a background screen for lock screen. Furthermore, a plurality of objects may include an icon, a widget, an application execution menu, a thumbnail image, and the like.

Next, the process of selecting at least one image to be set to a background image of the background screen (S120) is carried out. Here, the selector 182 may select one image or select a plurality of images.

The controller 180 may select any one image, and then sense a control command associated with configuring a background image of the background screen. On the contrary, the controller 180 may sense a control command associated with configuring a background image of the background screen, and then select a select any one image to be set to the background image.

Then, the process of displaying a preview screen for the background screen and the selected image together on the display unit 151 is carried out.

At this time, the preview screen may include an outline of the object contained in the background screen. The preview screen and selected image may be displayed to be overlapped with each other, and the controller 180 may display at least one of the preview screen and selected image in a transparent or semi-transparent manner on the display unit 151.

Here, when there are a plurality of background screens, a plurality of preview screens corresponding to the plurality of background screens, respectively, may be displayed on the display unit 151. Furthermore, a preview screen selected from the plurality of preview screens may be displayed in a first region, and the other preview screens may be displayed in a second region. The other preview screens may be displayed in a second region in the form of a thumbnail image.

Furthermore, when there are a plurality of selected images, the plurality of images may be displayed on the display unit 151. Furthermore, an image selected from the plurality of images may be displayed in a third region, and the other images may be displayed in a fourth region. The other images may be displayed in a fourth region in the form of a thumbnail image.

Next, when the at least a partial region of the selected image is overlapped with the preview screen, the process of setting at least a partial region of the selected image to the background image of the background screen (S140) is carried out.

At this time, at least a partial region of the selected image overlapped with the preview screen may be changed to another region based on a touch input on at least one of the preview screen and selected image. Accordingly, the user may drag at least one of the preview screen and selected image, thereby configuring a region of the image overlapped with the preview screen as a background image to be displayed on the background screen.

As described above, according to the present disclosure, when configuring a background image of the background screen, a preview screen for the background screen may be displayed on the display unit 151, and an outline of objects contained in the background screen may be displayed on the preview screen. Accordingly, when configuring a background image of the background screen, the user may dispose the background image by taking objects contained in the background screen into consideration, thereby allowing the user to view the background image of the background screen as a whole. As a result, it may be possible to enhance the user's convenience.

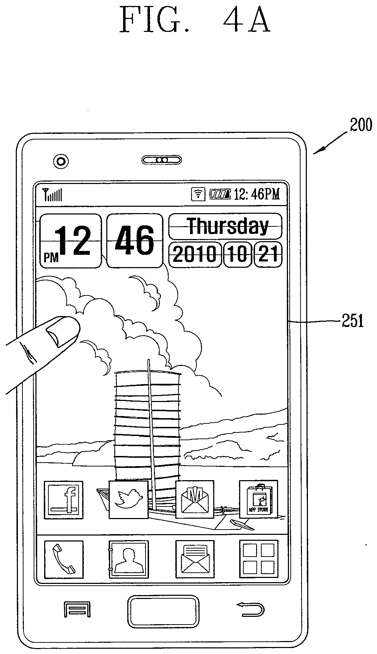

FIGS. 4A through 4E are conceptual views illustrating a first operation example of the mobile terminal according to FIG. 3. The mobile terminal 200 may include a display unit 251 (refer to FIG. 1), a selector 182 (refer to FIG. 1), and a controller 180 (refer to FIG. 1).

As illustrated in FIG. 4A, the display unit 251 may display a plurality of objects on the background screen for home screen. At this time, as described above, objects displayed on the background screen may include icon, widgets, application execution menus, thumbnail images, and the like.

A background screen for home screen and a background screen for lock screen may be configured by the user using various contents. For example, texts, images, videos or contents downloaded from a server stored in the memory 160 (refer to FIG. 1) may be used for the background screen. Furthermore, a specific execution screen of an application may be used for the background screen.

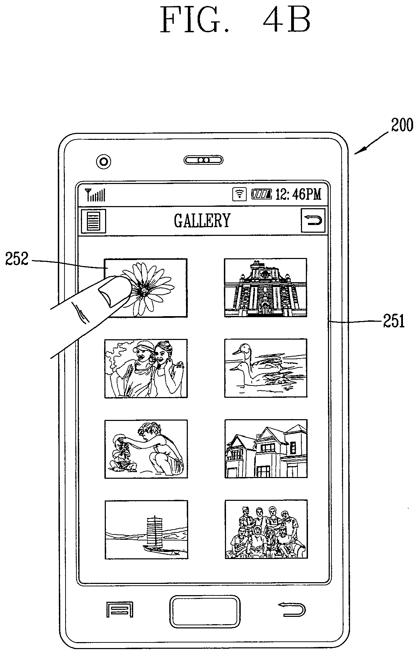

At this time, when the user makes a touch on the background screen of the display unit 251, the controller 180 may sense a control command for configuring a background image of the background screen. As illustrated in FIG. 4B, the controller 180 may display a plurality of images on the display unit 251. At this time, the plurality of images may be images stored in the memory 160 or images downloaded from the server.

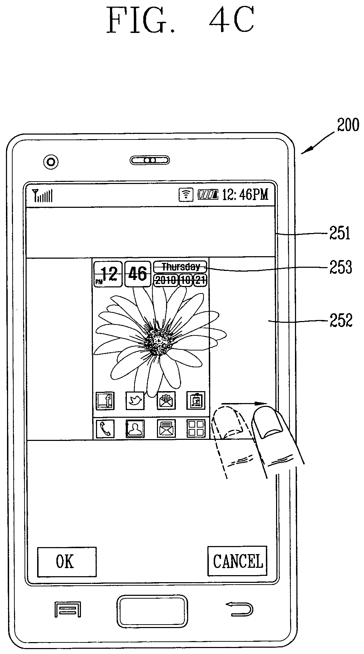

When at least one image 252 of the plurality of images is selected, as illustrated in FIG. 4C, the controller 180 may display a preview screen 253 for the background screen and the selected image 252 together on the display unit 251.

At this time, as illustrated in the drawing, the preview screen 253 may be displayed to be overlapped with at least a partial region of the selected image 252. Furthermore, at least one of the preview screen 253 and selected image 252 may be displayed in a transparent or semi-transparent manner such that the user can change the overlapped region while viewing the preview screen 253 and selected image 252.

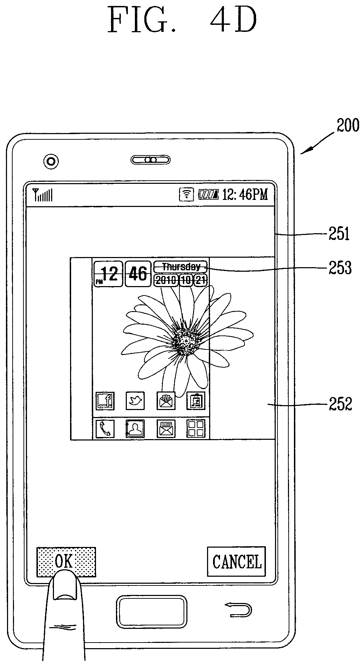

The controller 180 may change at least a partial region of the selected image 252 overlapped with the preview screen 253 to another region as illustrated in FIG. 4D, based on a touch input on the selected image 252.

Though a case where a drag input is sensed as a touch input on the selected image 252 is illustrated in the drawing, the kind of touch input is not limited to this. In other words, the controller 180 may move the location of the selected image 252 based on a drag input or flick input. Furthermore, the controller 180 may change the size of the selected image 252 based on a pinch-in or pinch-out touch input. Furthermore, the controller 180 may change the horizontal and vertical ratio of the selected image 252, and rotate the selected image 252.

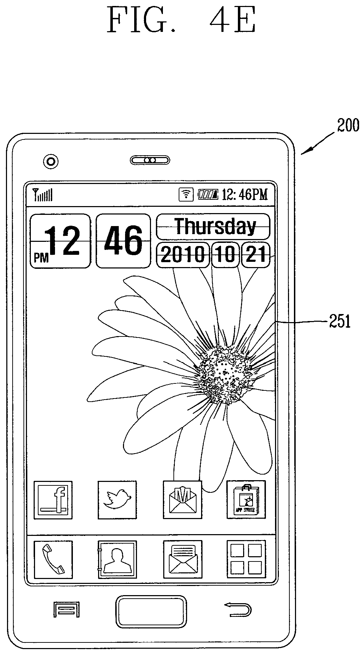

Accordingly, as illustrated in FIG. 4E, the background image of the background screen may be specified as at least a partial region of the selected image 252 that has been overlapped with the preview screen 253.

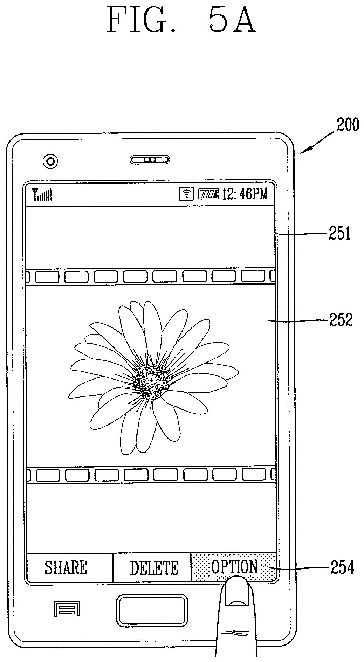

FIGS. 5A through 5E are conceptual views illustrating a second operation example of the mobile terminal according to FIG. 3. The mobile terminal 200 may include a display unit 251 (refer to FIG. 1), a selector 182 (refer to FIG. 1), and a controller 180 (refer to FIG. 1).

As illustrated in FIG. 5A, the display unit 251 may display the selected image 252. At this time, the selected image 252 may be an image stored in the memory 160 (refer to FIG. 1) or an image downloaded from the server.

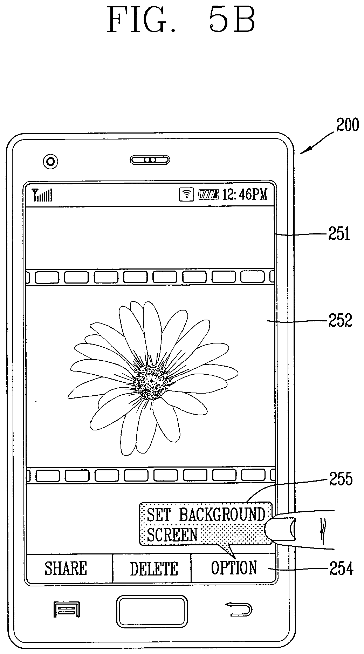

At this time, when the user makes a touch on an option menu 254 of the display unit 251, the controller 180 may display a background screen setting menu 255 on the display unit 251 as illustrated in FIG. 5B.

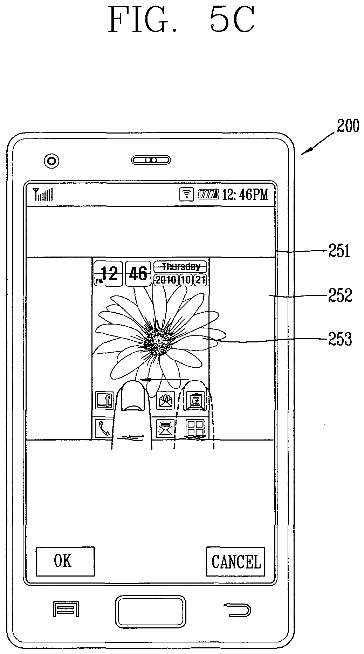

Then, when the user makes a touch on the background screen setting menu 255, as illustrated in FIG. 5C, the controller 180 may sense a control command for configuring a background image of the background screen, and display the preview screen 253 for the background screen of the home screen and the selected image 252 together on the display unit 251.

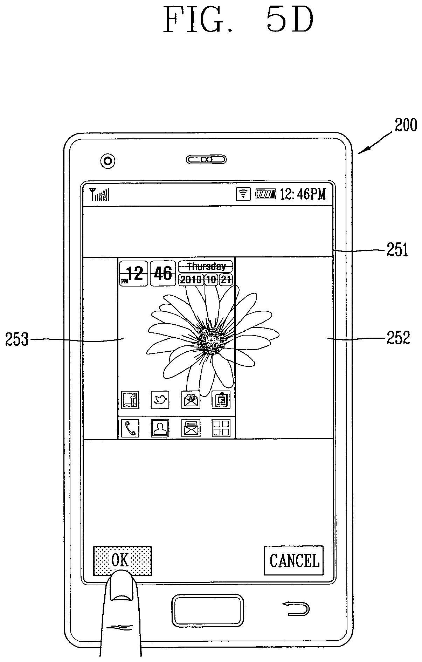

At this time, as illustrated in the drawing, the preview screen 253 may be displayed to be overlapped with at least a partial region of the selected image 252. The controller 180 may change at least a partial region of the selected image 252 overlapped with the preview screen 253 to another region as illustrated in FIG. 5D, based on a touch input on the preview screen 253.

Though a case where a drag input is sensed as a touch input on the preview screen 253 is illustrated in the drawing, the kind of touch input is not limited to this. In other words, the controller 180 may move the location of the preview screen 253 based on a drag input or flick input. Furthermore, the controller 180 may change the size of the preview screen 253 based on a pinch-in or pinch-out touch input, thereby changing a size ratio of the image 252 with respect to the preview screen 253.

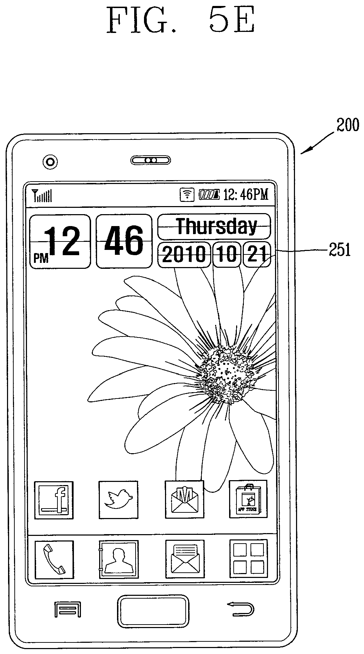

Accordingly, as illustrated in FIG. 5E, the background image of the background screen may be specified as at least a partial region of the selected image 252 that has been overlapped with the preview screen 253.

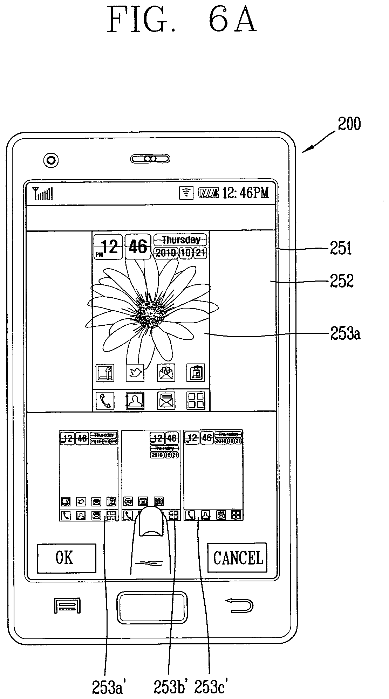

FIGS. 6A through 6D are conceptual views illustrating a third operation example of the mobile terminal according to FIG. 3. The mobile terminal 200 may include a display unit 251 (refer to FIG. 1), a selector 182 (refer to FIG. 1), and a controller 180 (refer to FIG. 1).

As illustrated in FIG. 6A, the display unit 251 may display a preview screen (hereinafter, referred to as a "first preview screen 253a") for the background screen (hereinafter, referred to as a "first background screen) selected from the background screens (hereinafter, referred to as "first through third background screens") of the home screen and the selected image 252 together. Furthermore, the display unit 251 may display thumbnail images 253a'-253c' for a plurality of preview screens (hereinafter, referred to as "first through third preview screens 253a-253c") corresponding to the first through the third background screen, respectively.

At this time, as illustrated in the drawing, the first preview screen 253a is displayed in a first region of the display unit 251, and thumbnail images 253a'-253c' for the first through third preview screens 253a-253c may be displayed in a second region of the display unit 251. Furthermore, though it is illustrated that the first preview screen 253a is displayed in the first region of the display unit 251, the first through third preview screens 253a-253c may be displayed together in the first region of the display unit 251.

The controller 180 may specify at least a partial region of the image 252 overlapped with the first preview screen 253a as a background image of the first background screen.

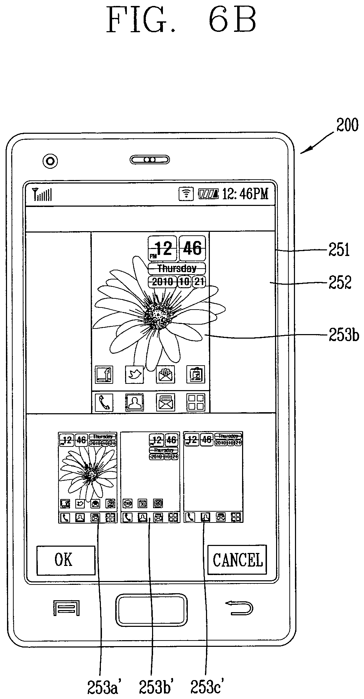

Then, when the thumbnail image 253b' for the second preview screen 253b is selected, as illustrated in FIG. 6B, the controller 180 may display the second preview screen 253b in the first region of the display unit 251. At this time, the second preview screen 253b may be displayed along with the selected image 252. The controller 180 may specify at least a partial region of the image 252 overlapped with the second preview screen 253b as a background image of the second background screen.

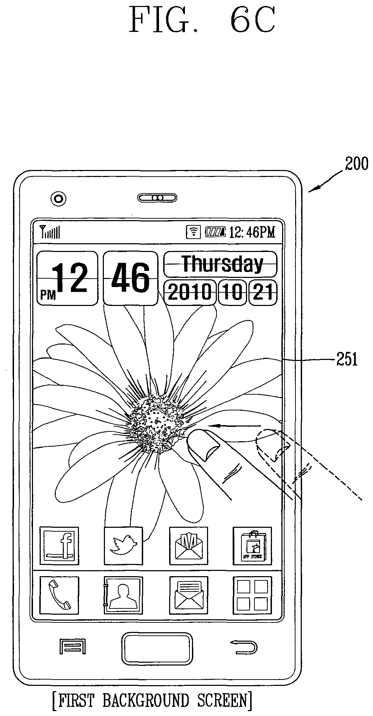

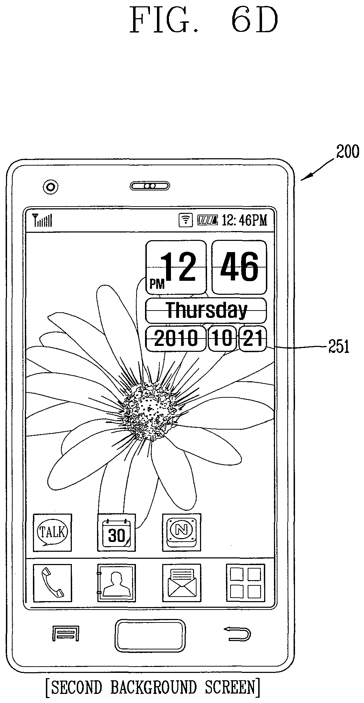

Accordingly, as illustrated in FIG. 6C, the background image of the first background screen may be specified as at least a partial region of the image 252 that has been overlapped with the first preview screen 253a. Furthermore, as illustrated in FIG. 6D, the background image of the second background screen may be specified as at least a partial region of the image 252 that has been overlapped with the second preview screen 253b.

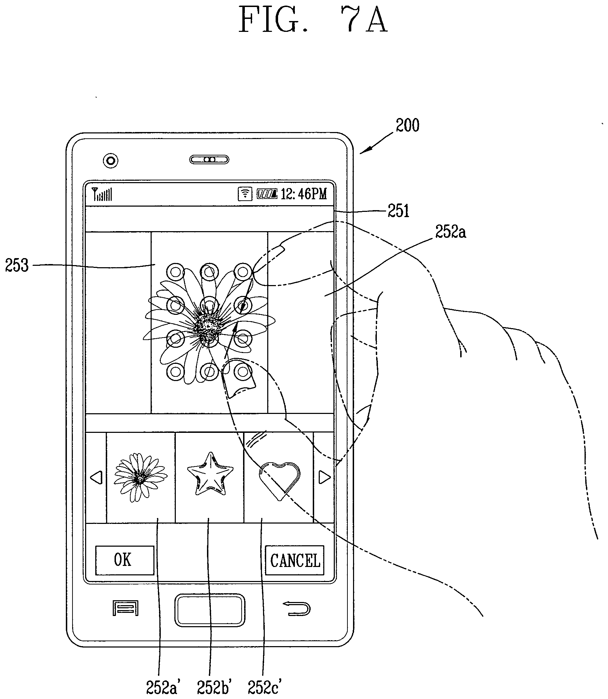

FIGS. 7A through 7D are conceptual views illustrating a fourth operation example of the mobile terminal according to FIG. 3. The mobile terminal 200 may include a display unit 251 (refer to FIG. 1), a selector 182 (refer to FIG. 1), and a controller 180 (refer to FIG. 1).

As illustrated in FIG. 7A, the display unit 251 may display a preview screen 253 for the background screen of the lock screen and the selected image (hereinafter, referred to as a "first image 252a") together. Furthermore, the display unit 251 may display thumbnail images 252a'-252c' for a plurality of images (hereinafter, referred to as "first through third images 252a-252c").

At this time, as illustrated in the drawing, the first image 252a is displayed in a third region of the display unit 251, and thumbnail images 252a'-252c' for the first through third images 252a-252c may be displayed in a fourth region of the display unit 251. Furthermore, though it is illustrated that the first image 252a is displayed in the first region of the display unit 251, the first through third images 252a-252c may be displayed together in the third region of the display unit 251.

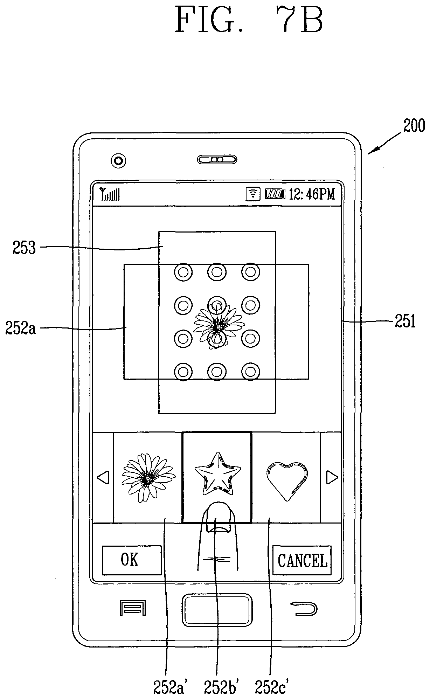

The controller 180 may change the size of the first image 252a overlapped with the preview screen 253, as illustrated in FIG. 7B, based on a touch input, for example, a pinch-out touch input on the first image 252a.

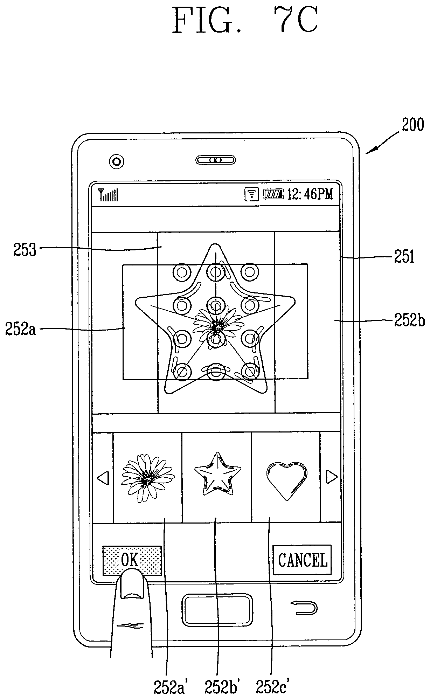

Then, when a thumbnail image 252b' corresponding to the second image 252b is selected, as illustrated in FIG. 7C, the controller 180 may display the second image 252b in a third region of the display unit 251. At this time, the preview screen 253 may be displayed to be overlapped with the second image 252b and the first image 252a of which size is changed.

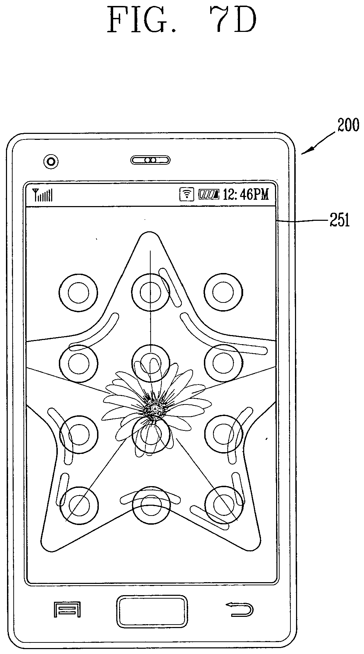

Accordingly, as illustrated in FIG. 7D, a background image for the background screen of the lock screen may be specified as at least a partial region of the second image 252b that has been overlapped with the preview screen 253 and at least a partial region of the first image 252a of which size is changed.

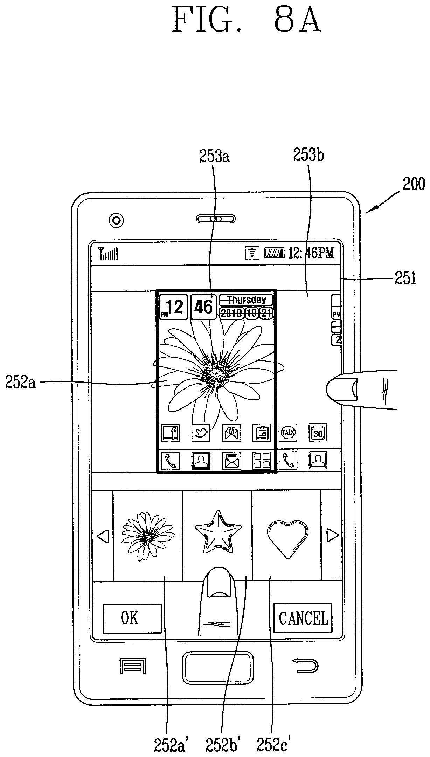

FIGS. 8A through 8E are conceptual views illustrating a fifth operation example of the mobile terminal according to FIG. 3. The mobile terminal 200 may include a display unit 251 (refer to FIG. 1), a selector 182 (refer to FIG. 1), and a controller 180 (refer to FIG. 1).

As illustrated in FIG. 8A, the display unit 251 may display preview screens (hereinafter, referred to as "first through third preview screens 253a-253c") for background screens (hereinafter, referred to as "first through third background screens") of the home screen and the selected image (hereinafter, referred to as a "first image") together. Furthermore, the display unit 251 may display thumbnail images 252a'-252c' for the plurality of images (hereinafter, referred to as "first through third images 252a-252c")

The controller 180 may specify at least a partial region of the first image 252a overlapped with the first preview screen 253a as a background image of the first background screen.

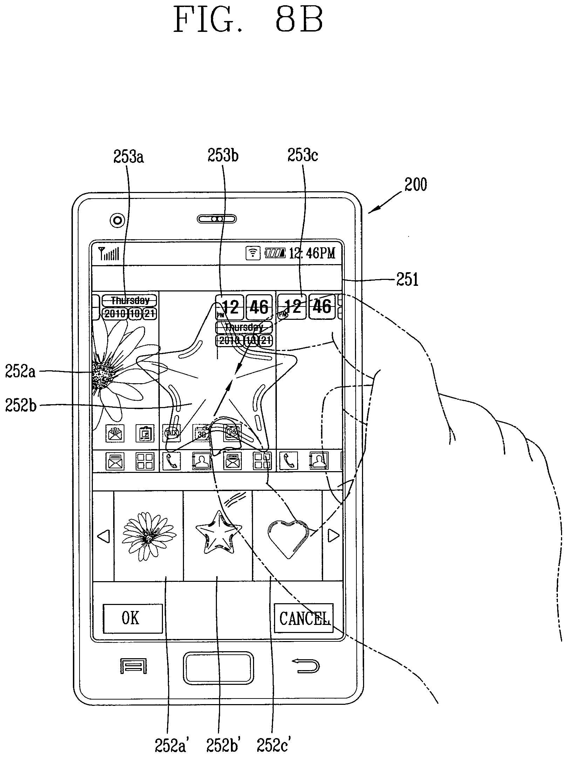

Then, when the second preview screen 253b is selected, and the thumbnail image 252b' for the second image 252b is selected, as illustrated in FIG. 8B, the controller 180 may display the second preview screen 253b to be overlapped with the second image 252b on the display unit 251.

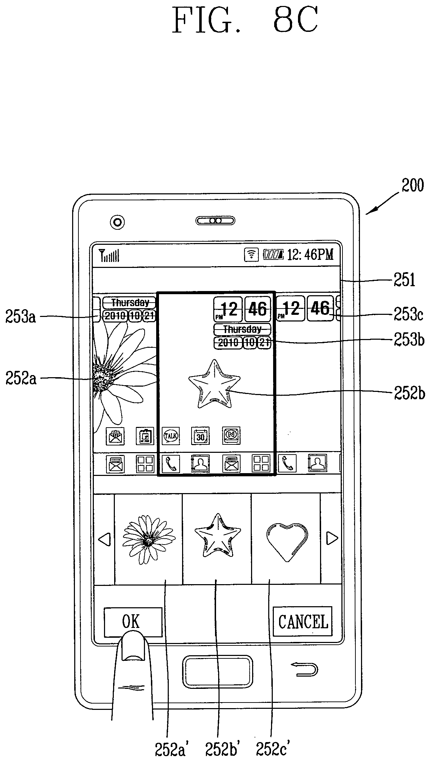

The controller 180 may change the size of the second image 252b overlapped with the second preview screen 253b, as illustrated in FIG. 8C, based on a touch input, for example, a pinch-out touch input on the second image 252b.

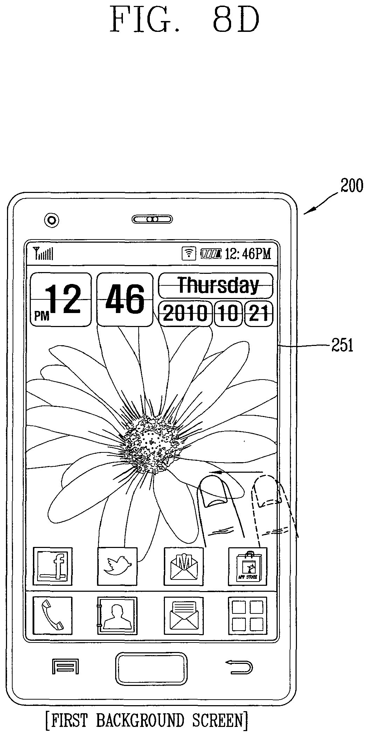

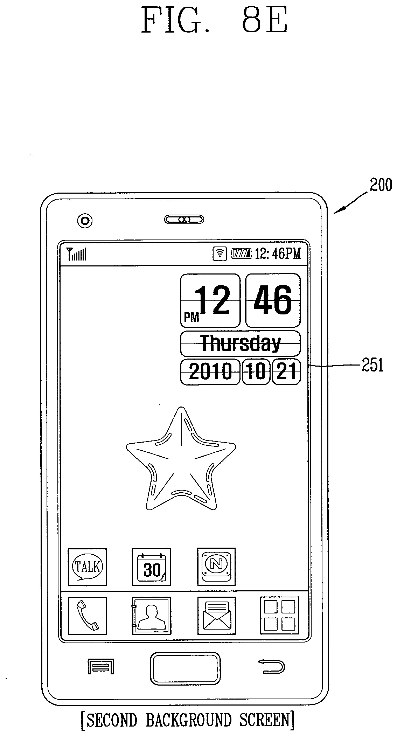

Accordingly, as illustrated in FIG. 8D, a background image for the first background screen may be specified as at least a partial region of the first image 252a that has been overlapped with the first preview screen 253a. Furthermore, as illustrated in FIG. 8E, a background image for the second background screen may be specified as at least a partial region of the second image 252b that has been overlapped with the second preview screen 253b and of which size is changed.

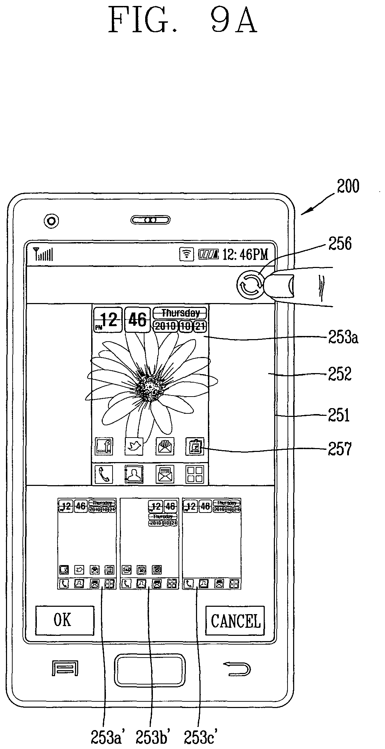

FIGS. 9A through 9D are conceptual views illustrating a sixth operation example of the mobile terminal according to FIG. 3. The mobile terminal 200 may include a display unit 251 (refer to FIG. 1), a selector 182 (refer to FIG. 1), and a controller 180 (refer to FIG. 1).

As illustrated in FIG. 9A, the display unit 251 may display a preview screen (hereinafter, referred to as a "first preview screen 253a") for the background screen (hereinafter, referred to as a "first background screen") selected from background screens (hereinafter, referred to as "first through third background screens") of the home screen and the selected image 252 together. Furthermore, the display unit 251 may display thumbnail images 253a'-253c' for a plurality of preview screens (hereinafter, referred to as "first through third preview screens 253a-253c") corresponding to the first through third background screens, respectively.

The controller 180 may edit an object contained in the background screen. Specifically, the controller 180 may perform conversion between a background image setting mode of the background screen and an edit mode of the object based on a touch input on the display unit 251. Furthermore, the controller 180 may display either one of the image and the preview screen in a transparent or semi-transparent manner according to which mode, between the background image setting mode and the object edit mode, the mobile terminal is in.

As illustrated in the drawing, an icon 256 for a mode conversion function may be displayed on the display unit 251, and a background image setting mode of the background screen may be converted into an edit mode of the object. On the other hand, though not shown in the drawing, a background image setting mode of the background screen may be converted into an edit mode of the object based on a touch input on the display unit 251, for example, at least one of a single tab touch input, a double tab touch input, and a long touch input.

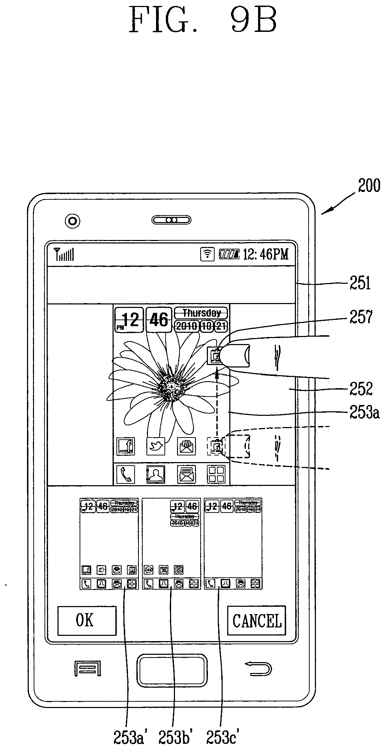

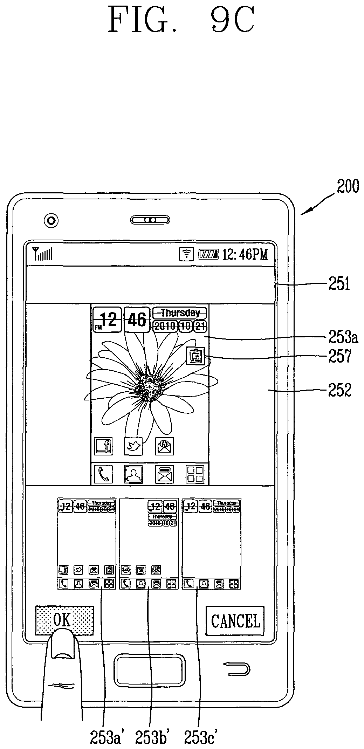

When it is converted into an edit mode of the object, as illustrated in FIGS. 9B and 9C, the controller 180 may move the location of the object 257 on the first preview screen 253a based on a touch input on an outline of the object 257 contained in the first preview screen 253a.

Though not shown in the drawing, the controller 180 may delete the object 257 or add anther object based on a touch input on the outline of the object 257. Furthermore, the controller 180 may control the graphic information of the object 257, for example, at least one of color, shape, size and three-dimensional depth values based on a touch input on the outline of the object 257.

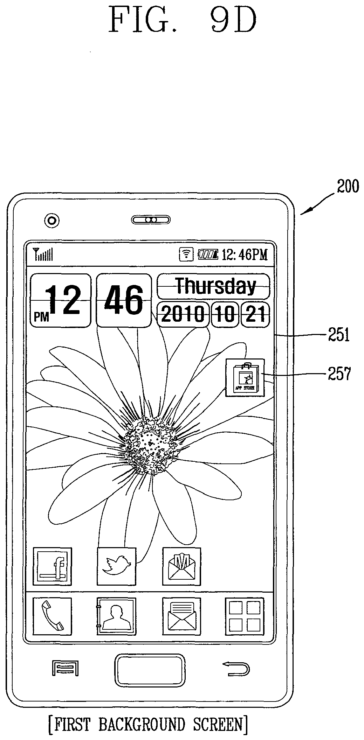

Then, as illustrated in FIG. 9D, the background image of the first background screen may be specified as at least a partial region of the image 252 that has been overlapped with the first preview screen 253a. At this time, the location of the object 257 may be moved on the first background screen.

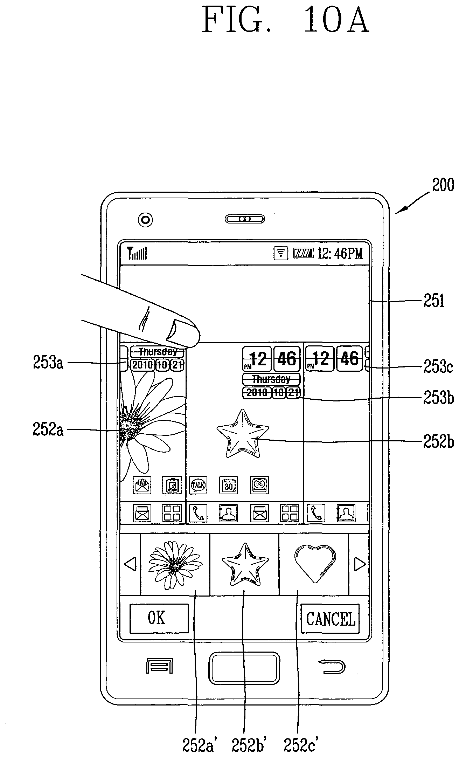

FIGS. 10A through 10C are conceptual views illustrating a seventh operation example of the mobile terminal according to FIG. 3. The mobile terminal 200 may include a display unit 251 (refer to FIG. 1), a selector 182 (refer to FIG. 1), and a controller 180 (refer to FIG. 1).

As illustrated in FIG. 10A, the display unit 251 may display preview screens (hereinafter, referred to as "first through third preview screens 253a-253c") for background screens (hereinafter, referred to as "first through third background screens") of the home screen and thumbnail images 252a'-252c' for a plurality of images (hereinafter, referred to as "first through third images 252a-252c") together.

The controller 180 may configure a graphic effect to be provided during the conversion between the plurality of background screens based on a touch input on the display unit 251. Here, the graphic effect may include at least one of fade-in, fade-out, slide, zoom-in, zoom-out and dissolve effects.

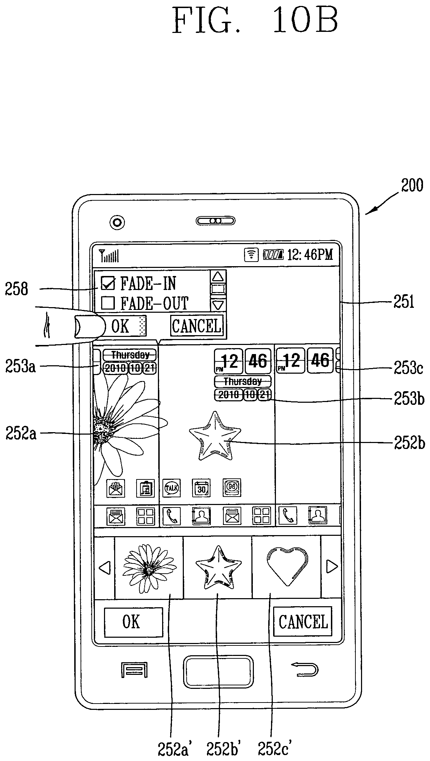

Specifically, when a touch input on a boundary line between the first and the second preview screen 253a, 253b, as illustrated in FIG. 10B, the controller 180 may display a graphic effect setting menu 258 on the display unit 251.

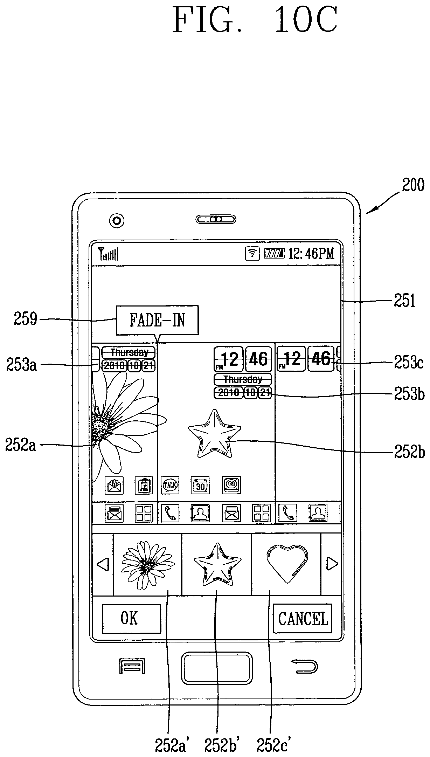

Then, when the user selects any one of the graphic effects contained in the graphic effect setting menu 258, for example, fade-in effect, as illustrated in FIG. 10C, the controller 180 may display a message 259 indicating the fade-in effect between the first and the second preview screen 253a, 253b.

On the other hand, though not shown in the drawing, when a touch input on the message 259 indicating the fade-in effect is sensed, the controller 180 may display the fade-in effect on the display unit 251 for a predetermined period of time.

Furthermore, though not shown in the drawing, then, the fade-in effect may be provided when the first background screen of the home screen is converted into the second background screen.

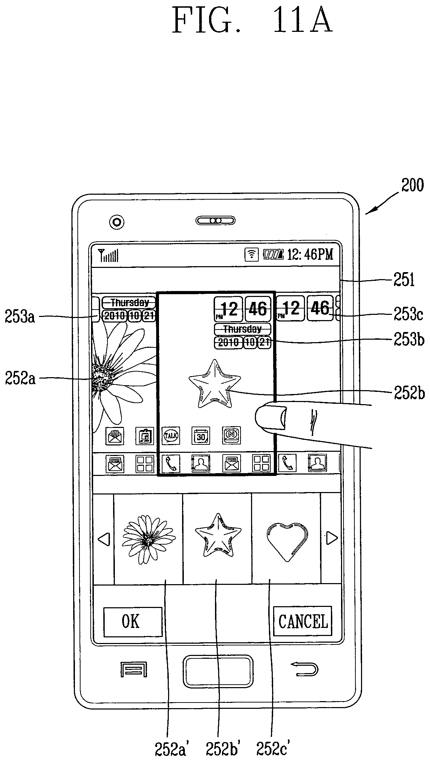

FIGS. 11A through 11G are conceptual views illustrating an eighth operation example of the mobile terminal according to FIG. 3. The mobile terminal 200 may include a display unit 251 (refer to FIG. 1), a selector 182 (refer to FIG. 1), and a controller 180 (refer to FIG. 1).

As illustrated in FIG. 11A, the display unit 251 may display preview screens (hereinafter, referred to as "first through third preview screens 253a-253c") for background screens (hereinafter, referred to as "first through third background screens") of the home screen and thumbnail images 252a'-252c' for a plurality of images (hereinafter, referred to as "first through third images 252a-252c") together.

There may be a plural number of background images to be set to at least one of a plurality of background screen. When a touch input on the second preview screen 253b is sensed, the controller 180 may set a plurality of background images to the second background screen.

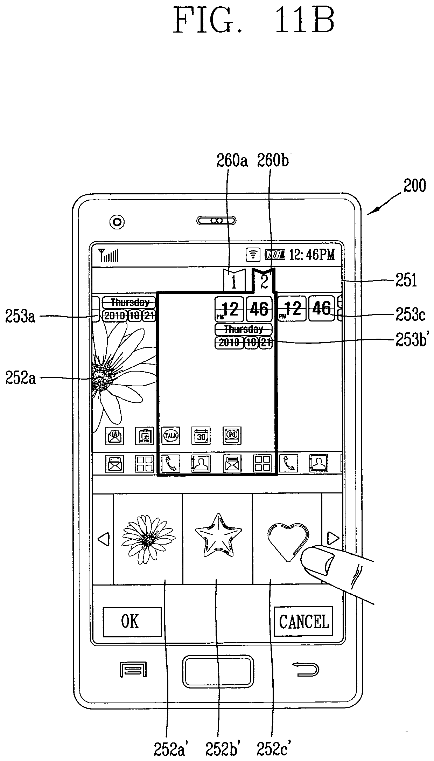

For example, when a touch input on the second preview screen 253b is sensed in a state that the second image 252b is set to the first background image for the second background screen, as illustrated in FIG. 11B, the controller 180 may display another preview screen 253b' for configuring the second background image on the display unit 251.

At this time, an icon 260b indicating that the preview screen displayed on the display unit 251 is another preview screen 253b' for configuring the second background image may be displayed on the display unit 251. Furthermore, an icon 260a for returning to the preview screen 253b for configuring the first background image may be also displayed on the display unit 251.

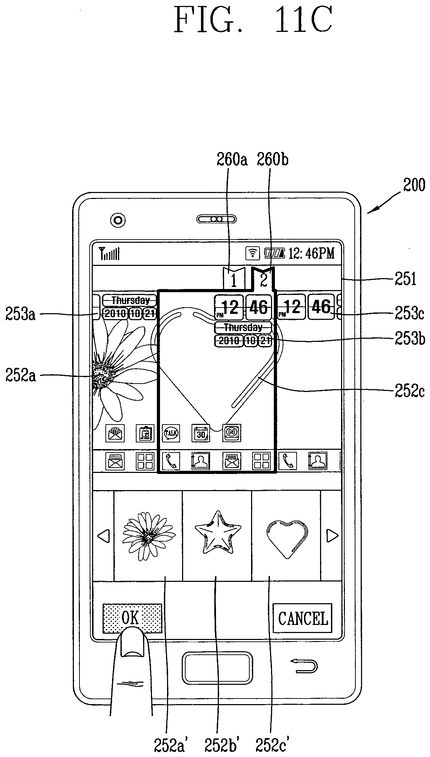

Then, when a thumbnail image 252c' for the third image 252c is selected, as illustrated in FIG. 11C, the controller 180 may display the another preview screen 253b' to be overlapped with the third image 252c on the display unit 251.

On the other hand, the controller 180 may convert the first background screen into the second background screen based on a touch input on the display unit 251 in a state that the first background screen is displayed. At this time, the controller 180 may determine either one of the first and the second background image as a background image of the second background screen to be displayed on the display unit 251 based on a kind of touch input.

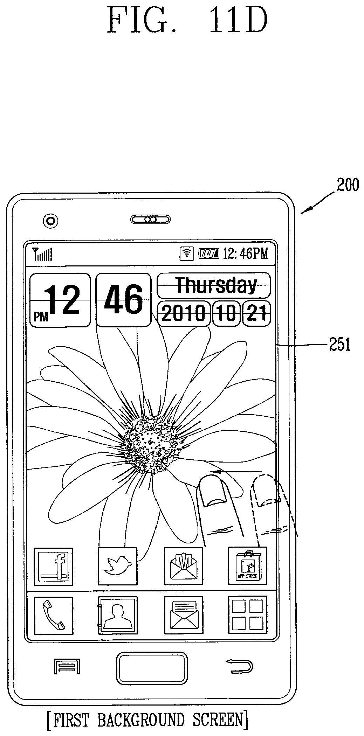

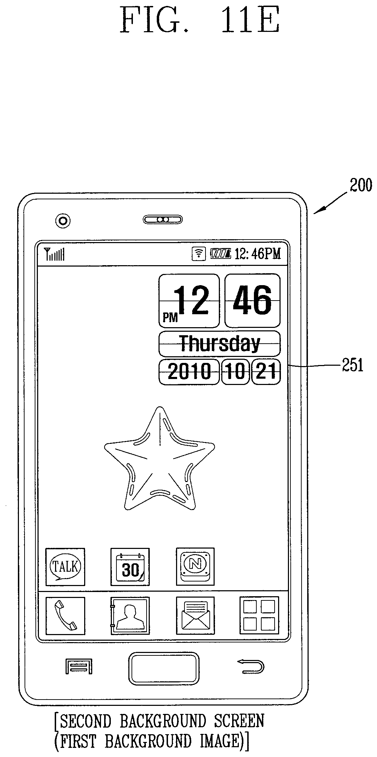

Specifically, when a drag input or flick input by one finger is sensed on the display unit 251 in a state the first background screen is displayed as illustrated in FIG. 11D, the first background image may be displayed on the display unit 251 as a background image of the second background screen as illustrated in FIG. 11E.

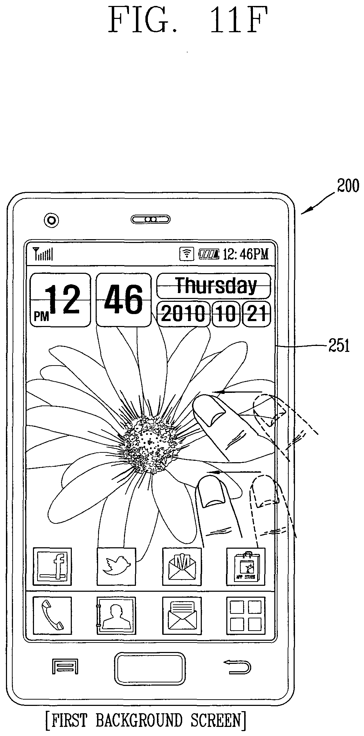

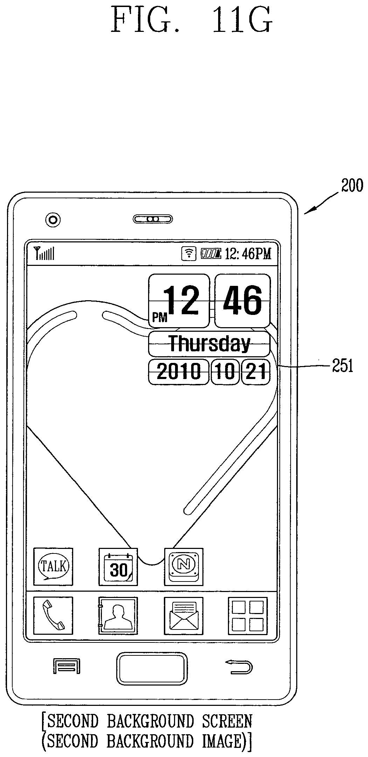

On the contrary, when a drag input or flick input by two fingers is sensed on the display unit 251 in a state the first background screen is displayed as illustrated in FIG. 11F, the second background image may be displayed on the display unit 251 as a background image of the second background screen as illustrated in FIG. 11G.

On the other hand, though not shown in the drawing, the first background screen may be converted into the second background screen, and then a background image of the second background screen may be displayed on the display unit 251. Furthermore, though not shown in the drawing, the background image of the first background screen may be gradually faded out and the background image of the second background screen may be gradually faded in while the first background screen is converted into the second background screen.

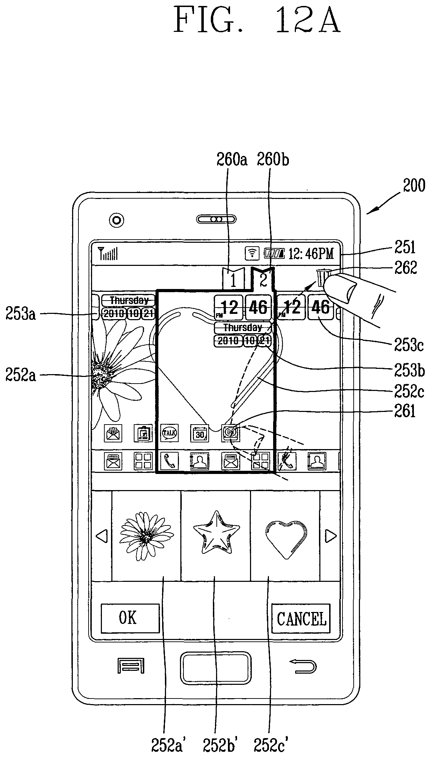

FIGS. 12A through 12D are conceptual views illustrating a ninth operation example of the mobile terminal according to FIG. 3. The mobile terminal 200 may include a display unit 251 (refer to FIG. 1), a selector 182 (refer to FIG. 1), and a controller 180 (refer to FIG. 1).

As illustrated in FIG. 12A, the display unit 251 may display preview screens (hereinafter, referred to as "first through third preview screens 253a-253c") for background screens (hereinafter, referred to as "first through third background screens") of the home screen and thumbnail images 252a'-252c' for a plurality of images (hereinafter, referred to as "first through third images 252a-252c") together.

The controller 180 may edit objects contained in a plurality of background screens, respectively, based on a touch input on a plurality of preview screens corresponding to a plurality of background screens, respectively.

Though not shown in the drawing, an icon for a mode conversion function may be displayed on the display unit 251, and a background image setting mode of the background screen may be converted into an edit mode of the object. On the other hand, though not shown in the drawing, a background image setting mode of the background screen may be converted into an edit mode of the object based on a touch input on the display unit 251, for example, at least one of a single tab touch input, a double tab touch input, and a long touch input.

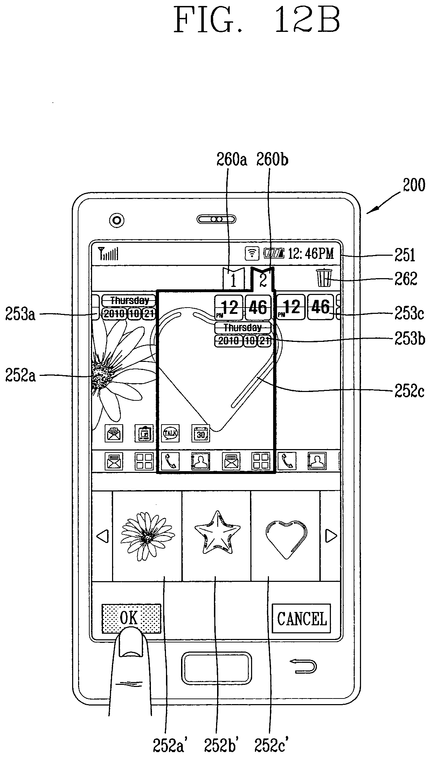

When converted into an edit mode of the object, as illustrated in FIGS. 12A and 12B, the controller 180 may delete an object 261 on another preview screen 253b' based on a touch input on an outline of the object 261 contained in the second preview screen 253b and the another preview screen 253b'. To this end, an icon (hereinafter, referred to as a "delete icon 262") for the function of deleting an object may be displayed on the display unit 251. The user may make a touch on an outline of the object 261, and then drag it in the direction of the delete icon 262, thereby deleting the object 261 on the another preview screen 253b'.

Though not shown in the drawing, the controller 180 may move the location of the object 261 or add anther object based on a touch input on the outline of the object 261. Furthermore, the controller 180 may control the graphic information of the object 261, for example, at least one of color, shape, size and three-dimensional depth values based on a touch input on the outline of the object 261.

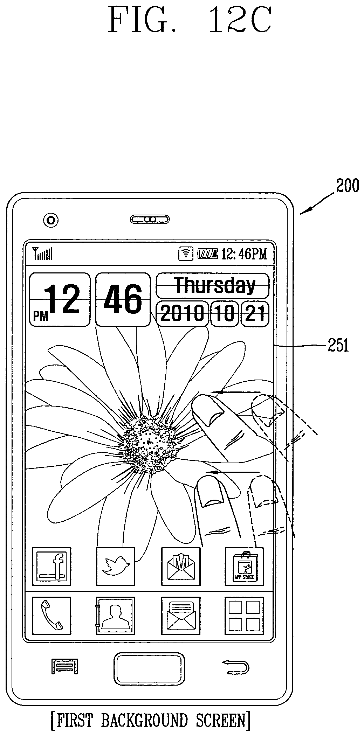

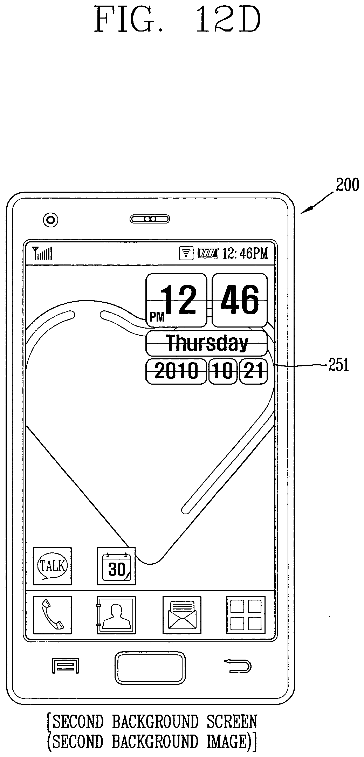

Then, when a drag input or flick input by two fingers is sensed on the display unit 251 in a state the first background screen is displayed as illustrated in FIG. 12C, the second background image may be displayed on the display unit 251 as a background image of the second background screen as illustrated in FIG. 12D. At this time, the object 261 may be disappeared on the second background screen.

Furthermore, according to an embodiment of present disclosure, the foregoing method may be implemented as codes readable by a processor on a medium written by a program. Examples of the processor-readable media may include ROM, RAM, CD-ROM, magnetic tape, floppy disk, and optical data storage device, and the like, and also include a device implemented in the form of a carrier wave (for example, transmission via the Internet).

The configurations and methods according to the above-described embodiments will not be applicable in a limited way to the foregoing mobile terminal, and all or part of each embodiment may be selectively combined and configured to make various modifications thereto.

## Claims

1. A mobile terminal (100), comprising:
a display (151) configured to selectively display a first background screen or a second background screen, the second background screen including an object; and
a controller (180) configured to:
detect receipt of a selection of a plural number of images for use as a plural number of background images of the second background screen;
control the display (151) to display a first of the selected images and a preview screen of the second background screen together such that the preview screen occupies less than an entirety of the display (151) and at least a portion of the selected first image overlaps the preview screen and to control the display (151) to display a second of the selected images and another preview screen of the second background screen together such that the another preview screen occupies less than an entirety of the display (151) and at least a portion of the selected second image overlaps the another preview screen;
set the at least a portion of the selected first image as a first background image of the second background screen and set the at least a portion of the selected second image as a second background image of the second background screen; and
control the display (151) to display the second background screen including the first background image when a drag input or flick input by one finger is sensed on the display in a state the first background screen is displayed, and control the display (151) to display the second background screen including the second background image when a drag input or flick input by two fingers is sensed on the display in a state the first background screen is displayed,
wherein the preview screen comprises at least an outline of the object included in the second background screen.

2. The mobile terminal (100) of claim 1, wherein the controller (180) is further configured to change the at least a portion of the selected at least one image that overlaps the preview screen to another at least a portion of the selected at least one image based on received input.

3. The mobile terminal (100) of one of any claims 1 and 2, wherein the controller (180) is further configured to control the display (151) to display at least the preview screen or the selected at least one image transparently or semi-transparently.

4. The mobile terminal (100) of one of any claims 1, 2 and 3, wherein the second background screen comprises at least a background screen for a home screen or a background screen for a lock screen.

5. The mobile terminal (100) of claim 4, wherein the controller (180) is further configured to:
control the display (151) to display a plurality of thumbnail images on a first region of the display (151), each of the plurality of thumbnail images corresponding to one of a plurality of background screens;
detect receipt of a selection of one thumbnail image of the displayed plurality of thumbnail images; and
control the display (151) to display the preview screen on a second region of the display (151) separate from the first region of the display (151),
wherein the displayed preview screen corresponds to the selected thumbnail image.

6. The mobile terminal (100) of claim 4, wherein the controller (180) is further configured to:
control the display (151) to display a plurality of images available for selection as the background image in a first region of the display (151); and
control the display (151) to display a selected image of the plurality of images in a second region of the display (151).

7. The mobile terminal (100) of one of any claims 1, 2 and 4, wherein the controller (180) is further configured to edit the object based on received input.

8. The mobile terminal (100) of claim 7, wherein the controller (180) is further configured to:
change modes of the mobile terminal (100) between a background image setting mode and an object edit mode based on a detection of receipt of a mode selection;
control the display (151) to display the selected at least one image transparently or semi-transparently when the mobile terminal (100) is in the object edit mode; and
control the display (151) to display the preview screen transparently or semi-transparently when the mobile terminal (100) is in the background image setting mode.

9. The mobile terminal (100) of one of any claims 7 and 8, wherein the controller (180) is further configured to cause repositioning of the object on the second background screen, deletion of the object, or adding of another object onto the second background screen based on received input.

10. The mobile terminal (100) of one of any claims 7 and 8, wherein the controller (180) is further configured to cause changing of an appearance of the displayed object based on input received on the object in the preview screen.

11. The mobile terminal (100) of claim 4, wherein the controller (180) is further configured to:
control the display (151) to display a plurality of preview screens, each of the plurality of preview screens corresponding to one of a plurality of background screens,
control the display (151) to switch between displaying one background screen of the plurality of background screens and displaying another background screen of the plurality of background screens based on received input; and
control applying of a graphic effect during the switching based on received input.

12. The mobile terminal (100) of claim 11, wherein the controller (180) is further configured to control the display (151) to display a menu for receiving a selection of a type of the graphic effect to be applied between adjacent displayed preview screens of the displayed plurality of preview screens.

13. The mobile terminal (100) of claim 12, wherein the controller (180) is further configured to control applying of the selected type of graphic effect for a preset time.

14. The mobile terminal (100) of claim 4, wherein:
the at least one image is one of a plurality of images available for selection as the background image; and
the controller (180) is further configured to set more than one image of the plurality of images as background images of the second background screen.

15. A method of controlling a mobile terminal (100), the method comprising:
selectively displaying a first or second background screen on a display (151) of the mobile terminal (100), the second background screen including an object;
receiving a selection of a plural number of images for use as as a plural number of background images of the second background screen;
displaying a first of the selected images and a preview screen of the second background screen together on the display (151) such that the preview screen occupies less than an entirety of the display (151) and at least a portion of the selected first image overlaps the preview screen;
setting the at least a portion of the selected first image as a first background image of the second background screen;
displaying a second of the selected images and a preview screen of the second background screen together on the display (151) such that the preview screen occupies less than an entirety of the display (151) and at least a portion of the selected second image overlaps the preview screen;
setting the at least a portion of the selected second image as a second background image of the second background screen; and
displaying the second background screen including the first background image when a drag input or flick input by one finger is sensed on the display in a state the first background screen is displayed, or displaying the second background screen including the second background image when a drag input or flick input by two fingers is sensed on the display in a state the first background screen is displayed,
wherein the preview screen comprises at least an outline of the object included in the second background screen.

## Patentansprüche

1. Mobiles Endgerät (100), umfassend:
eine Anzeige (151), die dazu konfiguriert ist, selektiv einen ersten Hintergrundbildschirm oder einen zweiten Hintergrundbildschirm anzuzeigen, wobei der zweite Hintergrundbildschirm ein Objekt umfasst; und
eine Steuerung (180), die dazu konfiguriert ist:
einen Empfang einer Auswahl einer Mehrzahl von Bildern zur Verwendung als eine Mehrzahl von Hintergrundbildern des zweiten Hintergrundbildschirms zu erkennen;
die Anzeige (151) zu steuern, um ein erstes der ausgewählten Bilder und einen Vorschaubildschirm des zweiten Hintergrundbildschirms zusammen anzuzeigen, so dass der Vorschaubildschirm weniger als eine Gesamtheit der Anzeige (151) belegt und mindestens ein Abschnitt des ausgewählten ersten Bilds sich mit dem Vorschaubildschirm überschneidet, und die Anzeige (151) zu steuern, um ein zweites der ausgewählten Bilder und einen anderen Vorschaubildschirm des zweiten Hintergrundbildschirms zusammen anzuzeigen, so dass der andere Vorschaubildschirm weniger als eine Gesamtheit der Anzeige (151) belegt und mindestens ein Abschnitt des ausgewählten zweiten Bilds sich mit dem anderen Vorschaubildschirm überschneidet;
den mindestens einen Abschnitt des ausgewählten ersten Bilds als ein erstes Hintergrundbild des zweiten Hintergrundbildschirms einzustellen und den mindestens einen Abschnitt des ausgewählten zweiten Bilds als ein zweites Hintergrundbild des zweiten Hintergrundbildschirms einzustellen und
die Anzeige (151) zu steuern, um den zweiten Hintergrundbildschirm einschließlich des ersten Hintergrundbilds anzuzeigen, wenn eine Drag-Eingabe oder Flick-Eingabe durch einen Finger auf der Anzeige in einem Zustand, in dem der erste Hintergrundbildschirm angezeigt wird, erfasst wird, und die Anzeige (151) zu steuern, um den zweiten Hintergrundbildschirm einschließlich des zweiten Hintergrundbilds anzuzeigen, wenn eine Drag-Eingabe oder Flick-Eingabe durch zwei Finger auf der Anzeige in einem Zustand, in dem der erste Hintergrundbildschirm angezeigt wird, erfasst wird,
wobei der Vorschaubildschirm mindestens einen Umriss des Objekts, das von dem zweiten Hintergrundbildschirm umfasst ist, umfasst.

2. Mobiles Endgerät (100) nach Anspruch 1, wobei die Steuerung (180) weiterhin dazu konfiguriert ist, auf der Basis einer empfangenen Eingabe den mindestens einen Abschnitt des ausgewählten mindestens einen Bilds, der sich mit dem Vorschaubildschirm überschneidet, zu einem anderen mindestens einen Abschnitt des ausgewählten mindestens einen Bilds zu ändern.

3. Mobiles Endgerät (100) nach einem der Ansprüche 1 und 2, wobei die Steuerung (180) weiterhin dazu konfiguriert ist, die Anzeige (151) anzuzeigen, um mindestens den Vorschaubildschirm oder das ausgewählte mindestens eine Bild transparent oder halbtransparent anzuzeigen.

4. Mobiles Endgerät (100) nach einem der Ansprüche 1, 2 und 3, wobei der zweite Hintergrundbildschirm mindestens einen Hintergrundbildschirm für einen Startbildschirm oder einen Hintergrundbildschirm für einen Sperrbildschirm umfasst.

5. Mobiles Endgerät (100) nach Anspruch 4, wobei die Steuerung (180) weiterhin dazu konfiguriert ist:
die Anzeige (151) zu steuern, um mehrere Miniaturbilder auf einer ersten Region der Anzeige (151) anzuzeigen, wobei jedes der mehreren Miniaturbilder einem von mehreren Hintergrundbildschirmen entspricht;
einen Empfang einer Auswahl eines Miniaturbilds der angezeigten mehreren Miniaturbilder zu erkennen und
die Anzeige (151) zu steuern, um den Vorschaubildschirm auf einer zweiten Region der Anzeige (151), die von der ersten Region der Anzeige (151) getrennt ist, anzuzeigen,
wobei der angezeigte Vorschaubildschirm dem ausgewählten Miniaturbild entspricht.

6. Mobiles Endgerät (100) nach Anspruch 4, wobei die Steuerung (180) weiterhin dazu konfiguriert ist:
die Anzeige (151) zu steuern, um mehrere Bilder anzuzeigen, die zur Auswahl als das Hintergrundbild in einer ersten Region der Anzeige (151) verfügbar sind; und
die Anzeige (151) zu steuern, um ein ausgewähltes Bild der mehreren Bilder in einer zweiten Region der Anzeige (151) anzuzeigen.

7. Mobiles Endgerät (100) nach einem der Ansprüche 1, 2 und 4, wobei die Steuerung (180) weiterhin dazu konfiguriert ist, das Objekt auf der Basis einer empfangenen Eingabe zu bearbeiten.

8. Mobiles Endgerät (100) nach Anspruch 7, wobei die Steuerung (180) weiterhin dazu konfiguriert ist:
Modi des mobilen Endgeräts (100) auf der Basis einer Erkennung eines Empfangs einer Modusauswahl zwischen einem Hintergrundbildeinstellungsmodus und einem Objektbearbeitungsmodus zu ändern;
die Anzeige (151) zu steuern, um das ausgewählte mindestens eine Bild transparent oder halbtransparent anzuzeigen, wenn das mobile Endgerät (100) im Objektbearbeitungsmodus ist; und
die Anzeige (151) zu steuern, um den Vorschaubildschirm transparent oder halbtransparent anzuzeigen, wenn das mobile Endgerät (100) im Hintergrundbildeinstellungsmodus ist.

9. Mobiles Endgerät (100) nach einem der Ansprüche 7 und 8, wobei die Steuerung (180) weiterhin dazu konfiguriert ist, auf der Basis einer empfangenen Eingabe eine Neupositionierung des Objekts auf dem zweiten Hintergrundbildschirm, eine Löschung des Objekts oder eine Hinzufügung eines anderen Objekts auf den zweiten Hintergrundbildschirm zu bewirken.

10. Mobiles Endgerät (100) nach einem der Ansprüche 7 und 8, wobei die Steuerung (180) weiterhin dazu konfiguriert ist, auf der Basis einer Eingabe, die zu dem Objekt in dem Vorschaubildschirm empfangen wird, ein Ändern eines Erscheinungsbilds des angezeigten Objekts zu bewirken.

11. Mobiles Endgerät (100) nach Anspruch 4, wobei die Steuerung (180) weiterhin dazu konfiguriert ist:
die Anzeige (151) zu steuern, um mehrere Vorschaubildschirme anzuzeigen, wobei jeder der Vorschaubildschirme einem von mehreren Hintergrundbildschirmen entspricht,
die Anzeige (151) zu steuern, auf der Basis einer empfangenen Eingabe zwischen einem Anzeigen eines Hintergrundbildschirms der mehreren Hintergrundbildschirme und einem Anzeigen eines anderen Hintergrundbildschirms der mehreren Hintergrundbildschirme umzuschalten; und
auf der Basis einer empfangenen Eingabe ein Anwenden eines grafischen Effekts während des Umschaltens zu steuern.

12. Mobiles Endgerät (100) nach Anspruch 11, wobei die Steuerung (180) weiterhin dazu konfiguriert ist, die Anzeige (151) zu steuern, ein Menü zum Empfangen einer Auswahl eines Typs des anzuwendenden grafischen Effekts zwischen benachbarten angezeigten Vorschaubildschirmen der angezeigten mehreren Vorschaubildschirme anzuzeigen.

13. Mobiles Endgerät (100) nach Anspruch 12, wobei die Steuerung (180) weiterhin dazu konfiguriert ist, ein Anwenden des ausgewählten Typs eines grafischen Effekts für eine voreingestellte Zeit zu steuern.

14. Mobiles Endgerät (100) nach Anspruch 4, wobei:
das mindestens eine Bild eines von mehreren Bildern ist, die zur Auswahl als das Hintergrundbild verfügbar sind; und
die Steuerung (180) weiterhin dazu konfiguriert ist, mehr als ein Bild der mehreren Bilder als Hintergrundbilder des zweiten Hintergrundbildschirms einzustellen.

15. Verfahren zur Steuerung eines mobilen Endgeräts (100), wobei das Verfahren umfasst:
selektives Anzeigen eines ersten Hintergrundbildschirms oder eines zweiten Hintergrundbildschirms auf einer Anzeige (151) des mobilen Endgeräts (100), wobei der zweite Hintergrundbildschirm ein Objekt umfasst;
Empfangen einer Auswahl einer Mehrzahl von Bildern zur Verwendung als eine Mehrzahl von Hintergrundbildern des zweiten Hintergrundbildschirms;
Anzeigen eines ersten der ausgewählten Bilder und eines Vorschaubildschirms des zweiten Hintergrundbildschirms zusammen auf der Anzeige (151), so dass der Vorschaubildschirm weniger als eine Gesamtheit der Anzeige (151) belegt und mindestens ein Abschnitt des ausgewählten ersten Bilds sich mit dem Vorschaubildschirm überschneidet;
Einstellen des mindestens einen Abschnitts des ausgewählten ersten Bilds als ein erstes Hintergrundbild des zweiten Hintergrundbildschirms;
Anzeigen eines zweiten der ausgewählten Bilder und eines Vorschaubildschirms des zweiten Hintergrundbildschirms zusammen auf der Anzeige (151), so dass der Vorschaubildschirm weniger als eine Gesamtheit der Anzeige (151) belegt und mindestens ein Abschnitt des ausgewählten zweiten Bilds sich mit dem Vorschaubildschirm überschneidet;
Einstellen des mindestens einen Abschnitts des ausgewählten zweiten Bilds als ein zweites Hintergrundbild des zweiten Hintergrundbildschirms und
Anzeigen des zweiten Hintergrundbildschirms einschließlich des ersten Hintergrundbilds, wenn eine Drag-Eingabe oder Flick-Eingabe durch einen Finger auf der Anzeige in einem Zustand, in dem der erste Hintergrundbildschirm angezeigt wird, erfasst wird, und Anzeigen des zweiten Hintergrundbildschirms einschließlich des zweiten Hintergrundbilds, wenn eine Drag-Eingabe oder Flick-Eingabe durch zwei Finger auf der Anzeige in einem Zustand, in dem der erste Hintergrundbildschirm angezeigt wird, erfasst wird,
wobei der Vorschaubildschirm mindestens einen Umriss des Objekts, das von dem zweiten Hintergrundbildschirm umfasst ist, umfasst.

## Revendications

1. Terminal mobile (100), comprenant :
un dispositif d'affichage (151) configuré pour afficher de manière sélective un premier écran d'arrière-plan ou un second écran d'arrière-plan, le second écran d'arrière-plan comprenant un objet ; et
un dispositif de commande (180) configuré pour :
détecter la réception d'une sélection d'une pluralité d'images destinées à être utilisées comme une pluralité d'images d'arrière-plan du second écran d'arrière-plan ;
amener le dispositif d'affichage (151) à afficher ensemble une première image sélectionnée parmi les images sélectionnées et un écran de prévisualisation du second écran d'arrière-plan de telle sorte que l'écran de prévisualisation occupe moins de la totalité du dispositif d'affichage (151) et au moins une partie de la première image sélectionnée chevauche l'écran de prévisualisation, et amener le dispositif d'affichage (151) à afficher ensemble une deuxième image sélectionnée parmi les images sélectionnées et un autre écran de prévisualisation du second écran d'arrière-plan de telle sorte que l'autre écran de prévisualisation occupe moins de la totalité du dispositif d'affichage (151) et au moins une partie de la deuxième image sélectionnée chevauche l'autre écran de prévisualisation ;
définir l'au moins une partie de la première image sélectionnée en tant que première image d'arrière-plan du second écran d'arrière-plan et définir l'au moins une partie de la deuxième image sélectionnée en tant que seconde image d'arrière-plan du second écran d'arrière-plan ; et
amener le dispositif d'affichage (151) à afficher le second écran d'arrière-plan comprenant la première image d'arrière-plan lorsqu'une entrée de glissement ou une entrée de chiquenaude au moyen d'un seul doigt est détectée sur le dispositif d'affichage dans un état dans lequel le premier écran d'arrière-plan est affiché, et amener le dispositif d'affichage (151) à afficher le second écran d'arrière-plan comprenant la seconde image d'arrière-plan lorsqu'une entrée de glissement ou une entrée de chiquenaude au moyen de deux doigts est détectée sur le dispositif d'affichage dans un état dans lequel le premier écran d'arrière-plan est affiché, l'écran de prévisualisation comprenant au moins un aperçu de l'objet inclus dans le second écran d'arrière-plan.

2. Terminal mobile (100) selon la revendication 1, dans lequel le dispositif de commande (180) est en outre configuré pour changer l'au moins une partie de l'au moins une image sélectionnée qui chevauche l'écran de prévisualisation en au moins une autre partie de l'au moins une image sélectionnée sur la base de l'entrée reçue.

3. Terminal mobile (100) selon l'une quelconque des revendications 1 et 2, dans lequel le dispositif de commande (180) est en outre configuré pour amener le dispositif d'affichage (151) à afficher au moins l'écran de prévisualisation ou l'au moins une image sélectionnée de manière transparente ou semi-transparente.

4. Terminal mobile (100) selon l'une quelconque des revendications 1, 2 et 3, dans lequel le second écran d'arrière-plan comprend au moins un écran d'arrière-plan pour un écran d'accueil ou un écran d'arrière-plan pour un écran de verrouillage.

5. Terminal mobile (100) selon la revendication 4, dans lequel le dispositif de commande (180) est en outre configuré pour :
amener le dispositif d'affichage (151) à afficher une pluralité d'images miniatures sur une première région du dispositif d'affichage (151), chacune de la pluralité d'images miniatures correspondant à l'un d'une pluralité d'écrans d'arrière-plan ;
détecter la réception d'une sélection d'une image miniature parmi la pluralité affichée d'images miniatures ; et
amener le dispositif d'affichage (151) à afficher l'écran de prévisualisation sur une seconde région du dispositif d'affichage (151) distincte de la première région du dispositif d'affichage (151),
l'écran de prévisualisation affiché correspondant à l'image miniature sélectionnée.

6. Terminal mobile (100) selon la revendication 4, dans lequel le dispositif de commande (180) est en outre configuré pour :
amener le dispositif d'affichage (151) à afficher une pluralité d'images disponibles pour une sélection en tant qu'image d'arrière-plan dans une première région du dispositif d'affichage (151) ; et
amener le dispositif d'affichage (151) à afficher une image sélectionnée de la pluralité d'images dans une seconde région du dispositif d'affichage (151).

7. Terminal mobile (100) selon l'une quelconque des revendications 1, 2 et 4, dans lequel le dispositif de commande (180) est en outre configuré pour éditer l'objet sur la base d'une entrée reçue.

8. Terminal mobile (100) selon la revendication 7, dans lequel le dispositif de commande (180) est en outre configuré pour :
changer des modes du terminal mobile (100) entre un mode de réglage d'image d'arrière-plan et un mode d'édition d'objet sur la base d'une détection de réception d'une sélection de mode ;
amener le dispositif d'affichage (151) à afficher l'au moins une image sélectionnée de manière transparente ou semi-transparente lorsque le terminal mobile (100) est dans le mode d'édition d'objet ; et
amener le dispositif d'affichage (151) à afficher l'écran de prévisualisation de manière transparente ou semi-transparente lorsque le terminal mobile (100) est dans le mode de réglage d'image d'arrière-plan.

9. Terminal mobile (100) selon l'une quelconque des revendications 7 et 8, dans lequel le dispositif de commande (180) est en outre configuré pour provoquer le repositionnement de l'objet sur le second écran d'arrière-plan, la suppression de l'objet, ou l'ajout d'un autre objet sur le second écran d'arrière-plan sur la base d'une entrée reçue.

10. Terminal mobile (100) selon l'une quelconque des revendications 7 et 8, dans lequel le dispositif de commande (180) est en outre configuré pour provoquer le changement d'un aspect de l'objet affiché sur la base d'une entrée reçue sur l'objet dans l'écran de prévisualisation.

11. Terminal mobile (100) selon la revendication 4, dans lequel le dispositif de commande (180) est en outre configuré pour :
amener le dispositif d'affichage (151) à afficher une pluralité d'écrans de prévisualisation, chacun de la pluralité d'écrans de prévisualisation correspondant à l'un d'une pluralité d'écrans d'arrière-plan,
amener le dispositif d'affichage (151) à commuter entre l'affichage d'un écran d'arrière-plan de la pluralité d'écrans d'arrière-plan et l'affichage d'un autre écran d'arrière-plan de la pluralité d'écrans d'arrière-plan sur la base d'une entrée reçue ; et
commander l'application d'un effet graphique durant la commutation sur la base d'une entrée reçue.

12. Terminal mobile (100) selon la revendication 11, dans lequel le dispositif de commande (180) est en outre configuré pour amener le dispositif d'affichage (151) à afficher un menu pour recevoir une sélection d'un type de l'effet graphique à appliquer entre des écrans de prévisualisation affichés adjacents de la pluralité affichée d'écrans de prévisualisation.

13. Terminal mobile (100) selon la revendication 12, dans lequel le dispositif de commande (180) est en outre configuré pour commander l'application du type sélectionné d'effet graphique pendant un temps préréglé.

14. Terminal mobile (100) selon la revendication 4, dans lequel :
l'au moins une image est l'une d'une pluralité d'images disponibles pour une sélection en tant qu'image d'arrière-plan ; et
le dispositif de commande (180) est en outre configuré pour définir plus qu'une image de la pluralité d'images en tant qu'images d'arrière-plan du second écran d'arrière-plan.

15. Procédé de commande d'un terminal mobile (100), le procédé comprenant :
afficher de manière sélective un premier ou un second écran d'arrière-plan sur un dispositif d'affichage (151) du terminal mobile (100), le second écran d'arrière-plan comprenant un objet ;
recevoir une sélection d'une pluralité d'images destinées à être utilisées comme une pluralité d'images d'arrière-plan du second écran d'arrière-plan ;
afficher ensemble une première image sélectionnée parmi les images sélectionnées et un écran de prévisualisation du second écran d'arrière-plan sur le dispositif d'affichage (151) de telle sorte que l'écran de prévisualisation occupe moins de la totalité du dispositif d'affichage (151) et au moins une partie de la première image sélectionnée chevauche l'écran de prévisualisation ;
définir l'au moins une partie de la première image sélectionnée en tant que première image d'arrière-plan du second écran d'arrière-plan ;
afficher ensemble une deuxième image sélectionnée parmi les images sélectionnées et un écran de prévisualisation du second écran d'arrière-plan sur le dispositif d'affichage (151) de telle sorte que l'écran de prévisualisation occupe moins de la totalité du dispositif d'affichage (151) et au moins une partie de la deuxième image sélectionnée chevauche l'écran de prévisualisation ;
définir l'au moins une partie de la deuxième image sélectionnée en tant que seconde image d'arrière-plan du second écran d'arrière-plan ; et
afficher le second écran d'arrière-plan comprenant la première image d'arrière-plan lorsqu'une entrée de glissement ou une entrée de chiquenaude au moyen d'un seul doigt est détectée sur le dispositif d'affichage dans un état dans lequel le premier écran d'arrière-plan est affiché, ou afficher le second écran d'arrière-plan comprenant la seconde image d'arrière-plan lorsqu'une entrée de glissement ou une entrée de chiquenaude au moyen de deux doigts est détectée sur le dispositif d'affichage dans un état dans lequel le premier écran d'arrière-plan est affiché,
l'écran de prévisualisation comprenant au moins un aperçu de l'objet inclus dans le second écran d'arrière-plan.
